# EUROPEAN PATENT APPLICATION

(11) **EP 4 778 714 A1**
(43) Date of publication of application: **22.07.2026**
(21) Application number: 26152714.7
(22) Date of filing: 19.01.2026
(51) Int. Cl.: B32B 1/08, B32B 7/12, B32B 25/08, B32B 25/20, B32B 27/20, B32B 27/28, B32B 27/34

(54) **PFAS-FREE HOSE CONSTRUCTED WITH THERMOPLASTIC INNER LAYER**

(30) Priority: 20.01.2025 IN 202511004446; 13.08.2025 IN 202511077089
(71) Applicant: Eaton Intelligent Power Limited, Dublin 4 (IE)
(72) Inventor: SIRCAR, Indraneel, Dublin D04 Y0C2 (IE); MOHAPATRA, Chandan, Dublin D04 Y0C2 (IE); LACASSE, Randall, Dublin D04 Y0C2 (IE); PASALA, Ananda, Dublin D04 Y0C2 (IE); DUTTA, Anindya, Dublin D04 Y0C2 (IE); PAWAR, Shital Patangrao, Dublin D04 Y0C2 (IE)
(74) Representative: Jolliffe, Jack Louis

(57) **Abstract**

A PFAS-free hose is provided comprising an electrically conductive polyimide or PEEK innermost layer, optionally an adhesive tie layer, and a silicone tube layer. The conductive polyimide or PEEK innermost layer includes an electrically conductive filler and exhibits good electrical conductivity, is compatibility with aerospace fluids, and exhibits thermal stability, flexibility, and compatibility with outer tube layer when co-extruded.

## Description

### CROSS-REFERENCES TO RELATED APPLICATIONS

This application claims the benefit of priority to Indian Provisional Application No. 202511004446, filed January 20, 2025, and Indian Provisional Application No. 202511077089, filed August 13, 2025, the entire disclosures of each of which are incorporated by reference herein in their entireties.

### BACKGROUND

Current hoses used to carry aerospace fluids comprise polytetrafluoroethylene (PTFE) tube and a braiding/connector package. The PTFE material used for the inner tube is under scrutiny by the United States Environmental Protection Agency (EPA), the European Chemicals Agency (ECHA), and other global regulatory bodies. New regulations from the EPA regarding per- and polyfluoroalkyl substances (PFAS)-based materials may restrict the use of PTFE in many applications. Developing alternative materials to replace PTFE may be required. The PTFE tubes have a unique set of properties including chemical resistance to aero fluids, high thermal stability, and flexibility. Therefore, replacing PTFE for use in aerospace hoses is challenging.

US2006/0151043 A1 discloses a fire-resistant hose construction comprising a polyimide inner layer alone with other reinforcement layers. A PTFE tube filled with carbon black was wrapped around a polyimide film.

US 20060211993 discloses an impact resistant conduit for electrical wiring comprising a braided composite of carbon fibers impregnated with a resin such as polyetheretherketone, polyphenylene sulfide, polyether imide, polyamide, or polypropylene.

US 2011/0201731 A1, Korzhenko et al., discloses a composite comprising a polymer and 10 to 50% by weight of carbon nanotubes.

US 2019/0062524 A1, Tomzynska et al., discloses a composite comprising a polymer and carbon nanotube sheetlets.

US Pat. No. 3,911,962 discloses fire resistant flexible tubes comprising a fabric woven from glass or mineral fibers and impregnated with silicone or polyimide.

US Pat. No. 9,222,605 discloses ducting including a pipe with a thermoplastic layer and a reinforcing layer. The thermoplastic layer can be based on polyamides, polyetherimides, polyphenylene sulfide, polyetheretherketone, or polyetherketoneketone. Carbon black or graphite fillers can be employed.

US Pat. No. 9,969,036 B2 discloses a multi-layer hose comprising a silicone layer outside a polyimide layer along with other layers outside the silicone layer.

US Pat. No. 9,982,809 B2 discloses a composite tubing having a silicone layer inside of a polyimide outer layer.

US Pat. No. 10,932,326 discloses a flexible heated hose assembly for an aircraft comprising an inner fluid tube, first silicone liner, printed positive temperature co-efficient heater, and a pressure sensitive adhesive, where the printed PTC heater comprises a polyimide film.

US 11,708,920 B2, Hachet et al., discloses an annulated tubular structure for transporting fuel into a fuel tank of a vehicle, comprising at least one layer comprising 39-100% by weight of an aliphatic polyamide, 0-4 % by weight plasticizer, 0-20% by weight of an impact modifier, and 0-37% by weight of an additive.

US 11,787,926 B2, Mapkar et al., discloses an electrically conductive polymer composite comprising a polymer, an extrudability component, and a filler component comprising a strengthening component and a conductive component.

US 12,139,606, Mapkar at al., discloses a conductive polyether ether ketone (PEEK) material for aircraft fuel system comprising a PEEK, an electrically conductive filler, a dispersing and processing additive, and a dielectric filler.

US 12,187,452 Zhou et al., discloses an electrically conductive composition and fuel tube comprising a single polyamide polymer, conductive nano materials, a dielectric filler, and a dispersing agent.

EP 1834126 B1 discloses a hose construction having an inner tubular core, a thermal insulation layer comprising a polyimide film, one or more reinforcement layers, and a fire sleeve layer surrounded by a reinforcement layer. The fire sleeve layer can be cross-linked silicone.

CN214008467 U discloses a heat tracing pipeline used in in dust detection equipment having a polyimide inner layer with other reinforcement layers. In one example, a heat tracing pipeline comprises a combination of high-temperature resistant inner tubes, coated with heat conducting silica gel, spirally wound heating wires, and a silicon rubber sheath.

### SUMMARY

A PFAS-free hose is provided comprising an electrically conductive thermoplastic innermost layer, and a silicone layer. The conductive thermoplastic innermost layer includes an electrically conductive filler and exhibits good electrical conductivity, compatibility with aerospace fluids, and exhibits thermal stability, flexibility, and compatibility with outer tube layer when co-extruded.

A hybrid structured tube suitable for carrying aerospace fluids is provided. The tube comprises a high-performance thermoplastic polymer innermost layer and a silicone rubber outer layer. In some cases, the hybrid structured tube comprises an innermost layer comprising a high-performance thermoplastic polymer, CNTs, and a dispersing and processing additive to achieve electrical conductivity and chemical stability with aerospace fluids and an outer layer of a silicone rubber to impart temperature stability and desired flexibility. In some cases, the innermost layer does not include a fluoropolymer and is PTFE-free and PFAS-free. The hybrid structured tube can be used to carry aerospace fluids at temperatures up to 450 deg F.

A hose is provided, comprising at least two layers: an innermost high-performance thermoplastic polymer layer prepared from a composite composition comprising a high-performance thermoplastic polymer, an electrically conductive filler, and a dispersing and processing additive; and an outer first silicone rubber tube layer surrounding the innermost layer.

In some cases, the hose further comprises a tie layer disposed between the innermost layer and the first silicone rubber layer, wherein the tie layer comprises an adhesive.

In some cases, the hose further comprises an outer reinforcement layer, optionally wherein the outer reinforcement layer comprises a metallic braid or a non-metallic braid, said non-metallic braid comprising an aramid, carbon-fiber, ceramic, glass, or a fabric layer.

In some cases, the thermoplastic inner layer comprises a thermoplastic polymer selected from the group consisting of a polyimide, polyamide-imide (PAI), PEEK, PEKK, polyamide (PA), and blends thereof. In some cases, the PA is selected from the group consisting of PA46, PPA, and PA11. In some cases, the thermoplastic polymer comprises a polyimide. In some cases, the thermoplastic polymer comprises a PEEK. In some cases, the thermoplastic polymer comprises a PEKK. In some cases, the thermoplastic polymer is a polyimide. In some cases, the thermoplastic polymer is a PEEK. In some cases, the thermoplastic polymer is a PEKK. In some cases, the thermoplastic polymer comprises a polyimide and an additional polymer selected from the group consisting of PAI, PEEK, PEKK, PA46, PPA, and PA11. In some cases, the thermoplastic polymer comprises a PEEK and an additional polymer selected from the group consisting of polyimide, PAI, PEKK, PA46, PPA, and PA11. In some cases, the thermoplastic polymer comprises a PEKK and an additional polymer selected from the group consisting of polyimide, PAI, PEEK, PA46, PPA, and PA11.

Electrically conductive polyimide polymer compositions are provided comprising a polyimide film and uniformly dispersed low concentration of electrically conductive filler. The conductive polyimide polymer can be used as an antistatic inner tube layer for aerospace antistatic hoses. The conductive polymer composites exhibit high electrical conductivity, compatibility with aerospace fluids, thermal stability, flexibility, and compatibility with outer tube layer when co-extruded.

A hose is provided comprising at least three layers including an innermost layer comprising a thermoplastic polymer film; a first rubber tube layer surrounding the innermost layer; and a tie layer disposed between the innermost layer and the rubber layer, wherein the tie layer comprises an adhesive.

In some cases, the thermoplastic polymer is selected from the group consisting of polyimide (PI), polyamide (PA), polyphthalamide (PPA), polyetherimide (PEI), polyamide-imide (PAI), polyaryletherketone (PAEK), polyetherketone (PEK), polyetherketoneketone (PEKK), and bio-based polyetheretherketone (PEEK).

In some cases, the thermoplastic polymer is selected from the group consisting of polyimide (PI), polyetherketoneketone (PEKK), and polyetheretherketone (PEEK).

In some cases, the thermoplastic polymer is a PEEK polymer.

In some cases, the thermoplastic polymer is a PEKK polymer.

In some cases, the thermoplastic polymer is a polyimide polymer. In some cases the polyimide polymer is an aromatic polyimide polymer.

A hose is provided comprising at least three layers including an innermost layer comprising a polyimide polymer film; a first silicone rubber tube layer surrounding the innermost layer; and a tie layer disposed between the innermost layer and the rubber layer, wherein the tie layer comprises an adhesive.

A hose is provided comprising at least three layers including an innermost layer comprising a PEEK polymer film; a first silicone rubber tube layer surrounding the innermost layer; and a tie layer disposed between the innermost layer and the rubber layer, wherein the tie layer comprises an adhesive.

A hose is provided comprising at least three layers including an innermost layer comprising a PEKK polymer film; a first silicone rubber tube layer surrounding the innermost layer; and a tie layer disposed between the innermost layer and the rubber layer, wherein the tie layer comprises an adhesive.

In some cases, the polyimide polymer is produced by condensation of a dianhydride and a diamine. In some cases, the dianhydride is selected from the group consisting of pyromellitic dianhydride (PMDA), 1,4,5,8-naphthalene tetracarboxylic acid dianhydride (NTCDA), 3,3',4,4'-biphenyltetracarboxylic dianhydride (BPDA), and benzophenone-3,3',4,4'-tetracarboxylic dianhydride (BTDA). In some cases, the diamine is selected from the group consisting of 4,4'-oxydianiline (ODA), 4,4'-diaminodiphenyl ether (DAPE), 3,4'-oxydianiline, p-phenylenediamine (PDA), meta-phenylene diamine (MDA), 3,3'-diaminodiphenylmethane (DDM), and 5(6) -Amino-1-(4-aminophenyl)-1,3,3, trimethylindane (DAPI).

In some cases, the polyimide polymer is selected from the group consisting of poly (pyromellitic dianhydride-oxydianiline [PMDA-ODA], poly (3,3',4,4'-biphenyltetracarboxylic dianhydride-phenylene diamine [BPDA-PDA], and 5(6) - Amino-1-(4-aminophenyl)-1,3,3, trimethylindane-benzophenonetetacarboxylic dianhydride copolymer [BTDA-DAPI].

In some cases, the innermost layer comprises a polyimide polymer and optionally one or more additional thermoplastic polymers in a combined amount from 90-99.8 wt%, 93-99.6 wt%, or 95-99.5 wt%.

In some cases, the innermost layer comprises a PEEK polymer and optionally one or more additional thermoplastic polymers in a combined amount from 90-99.8 wt%, 93-99.6 wt%, or 95-99.5 wt%.

In some cases, the innermost layer comprises a PEKK polymer and optionally one or more additional thermoplastic polymers in a combined amount from 90-99.8 wt%, 93-99.6 wt%, or 95-99.5 wt%.

In some cases, the innermost layer has a thickness of no more than 1100 microns, no more than 1000 microns, no more than 750 microns, no more than 500 microns, no more than 300 microns, no more than 250 microns, optionally wherein the innermost film layer has a thickness in a range of from 100 microns to 1100 microns, 100 microns to 1000 microns, 100 microns to 750 microns, 100 microns to 500 microns, 100 microns to 300 microns, or 100 microns to 250 microns.

In some cases, the innermost layer is electrically conductive for static dissipation.

In some cases, the thermoplastic polymer film is prepared from a polyimide composition comprising a polyimide and an electrically conductive filler, optionally a spacer molecule, optionally a dispersing and processing additive, and further optionally an additional thermoplastic polymer.

In some cases, the innermost layer does not include a fluoropolymer.

In some cases, the hose further comprises an outer insulating silicone sleeve layer, optionally wherein the silicone sleeve layer comprises an inner metallic liner. In some cases, the outer insulating layer may comprise a foam silicone rubber, optionally having an inner metal foil.

In some cases, the hose further comprises one or more reinforcing layers.

In some cases, the reinforcing layers comprise a metallic braid, non-metallic braid comprising an aramid, ultra-high molecular weight polyethylene (UHMWPE), carbon-fiber, ceramic, glass, metal, or a fabric layer.

In some cases, the electrically conductive filler is selected from the group consisting of carbon nanotubes (CNTs), reduced graphene oxide (rGO), MXene composition, carbon black, carbon fiber, graphite, graphene, stainless-steel fibers, and silver nanowires.

In some cases, the thermoplastic polymer composition comprises 0.01-5.0 wt%, 0.1-4.0 wt%, 0.2-3.0 wt%. or 0.25-2.0 wt% of the electrically conductive filler.

In some cases, the additional thermoplastic polymer is selected from the group consisting of polyamide (PA), polyphthalamide (PPA), polyetherimide (PEI), polyamide-imide (PAI), polyaryletherketone (PAEK), polyetherketone (PEK), polyetherketoneketone (PEKK), and polyetheretherketone (PEEK).

In some cases, the spacer molecule is a diamine symmetrical molecule, optionally wherein the diamine is an aliphatic diamine or an aromatic diamine, further optionally wherein the diamine symmetrical molecules have a molecular weight (MW) of from about 500 to about 1500 g/mol.

In some cases, the thermoplastic polymer composition comprises 0-5.0 wt%, 0.1-4.0 wt%, or 0.5-3.0 wt% of the spacer molecule.

In some cases, the additional additive is selected from the group consisting of a UV stabilizer, light stabilizer, antioxidants, plasticizer, heat stabilizer, pigment, flame retardant, mechanical filler, lubricant, chain extender, chain cutter, and impact modifier.

In some cases, the thermoplastic polymer composition comprises the one or more additional additives in a range of 0-5 wt%, 0.05-4 wt%, 0.1-3 wt%, or 0.5-2 wt% one or more combined additional additives.

In some cases, the dispersing and processing additive is selected from the group consisting of selected from the group consisting of polyhedral oligomeric silsesquioxanes (POSS), silanes, and silanol-POSS.

In some cases, the thermoplastic polymer composition comprises from 0-5.0 wt%, 0.1 to 5.0 wt%, 0.2 to 3.0 wt%; or 0.25-2.0 wt% of the dispersing and processing additive.

In some cases, the first silicone rubber tube layer is prepared from a composition comprising a silicone selected from the group consisting of a methyl silicone (MQ), vinyl methyl silicone (VMQ), phenyl methyl silicone (PVMQ), and a polydimethylsiloxane (PDMS).

A PFAS-free aerospace hose is provided comprising a multiplicity of layers from an inner to an outer radial direction comprising: i) an anti-static innermost tube layer prepared from a composition comprising a thermoplastic polymer, an electrically conductive filler, and optionally one or more of a spacer molecule, optionally a dispersing and processing additive, optionally an additional polymer, and optional additional additives; ii) optionally an adhesive tie layer; and iii) a first silicone tube layer prepared from a composition comprising a silicone. In some cases, the thermoplastic polymer is a polyimide. In some cases, the thermoplastic polymer is a PEEK polymer. In some cases, the inner layer, after forming, goes through a surface functionalization treatment such as corona treatment, ozone treatment, plasma treatment, e-beam irradiation or similar to increase surface energy and promote adhesion between the outer rubber layer and the inner thermoplastic layer without needing an adhesive tie layer.

In some cases, the hose comprises one or more reinforcing layers.

In some cases, the hose comprises an outermost silicone sleeve layer, optionally wherein the silicone sleeve layer comprises an inner metallic liner. In some cases, the outer insulating layer may comprise a foam silicone rubber, optionally having an inner metal foil.

In some cases, the innermost tube layer is prepared from a composition comprising 90-99.8 wt% of a polyimide polymer optionally combined with one or more additional thermoplastic polymers; 0.01-5.0 wt of an electrically conductive filler; 0-5 wt% of a spacer molecule; 0-5 wt% of a dispersing and processing additive; and 0-5 wt% of one or more combined additional additives.

In some cases, the first silicone rubber tube layer is prepared from a composition comprising 40-99.5 wt% of a silicone base rubber;0.1-3.0 wt% curing agent; 0.1-2.0 wt% organic peroxide; 0-20 wt% of a structural filler; 0-20 wt% of a flame retardant; and 0-5.0 wt% of a pigment.

A method of making an aerospace hose is provided, the method comprising forming an innermost tube layer prepared from a thermoplastic polymer composition comprising a thermoplastic polymer and an electrically conductive filler, optionally wherein the thermoplastic polymer comprises a polyimide; optionally applying an adhesive to the innermost tube layer; and extruding a silicone rubber composition over the innermost tube layer; and curing the green hose to form the aerospace hose.

In some cases, the method comprises extruding or solution casing the inner layer; applying the adhesive layer to the inner layer; over-extruding a first silicone rubber tube layer over the adhesive layer to form a green aerospace hose; and curing/vulcanizing the green aerospace hose to obtain the cured aerospace hose.

In some cases, the method comprises extruding or solution casing the inner layer; applying the adhesive layer to the inner layer; wrapping rubber silicone sheets over the adhesive layer to form a tube layer in a green aerospace hose; and curing/vulcanizing the green aerospace hose to obtain the cured aerospace hose.

### BRIEF DESCRIPTION OF THE DRAWINGS

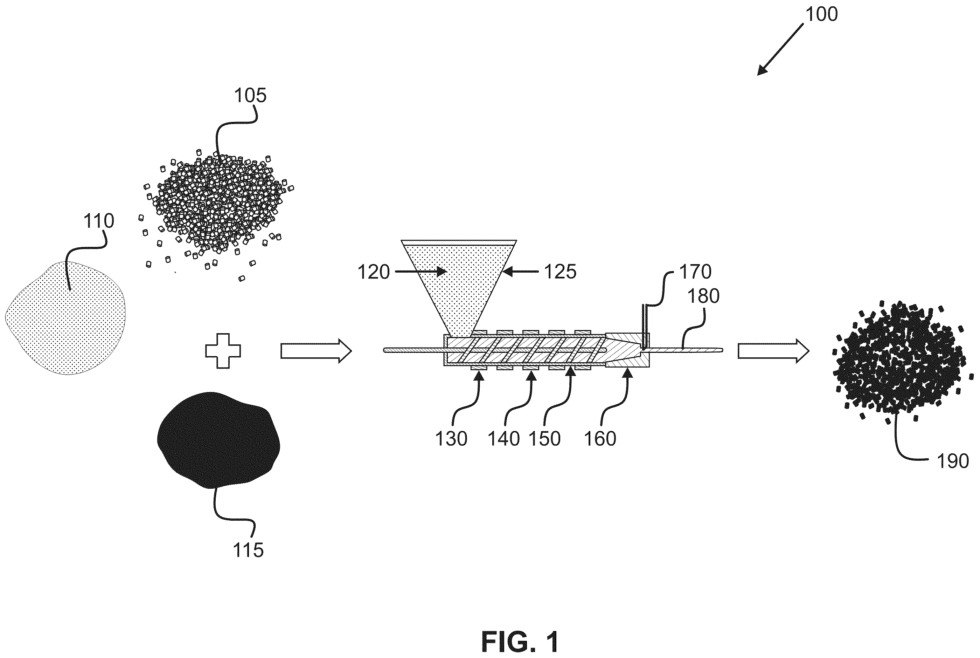

FIG. 1 shows an exemplary process for preparing the electrically conductive composite used in the innermost tube layer. High-performance thermoplastic polymer 105 in pellet form 120, functional additives 110, and carbon nanotubes 115 are added to a hopper 125 and mixed using a screw 130 and moved through a heater 140 through a barrel 150 and out a nozzle 160 and thermocouple 170 to obtain the polymer 180 as a conductive composite high-performance polymer 190.

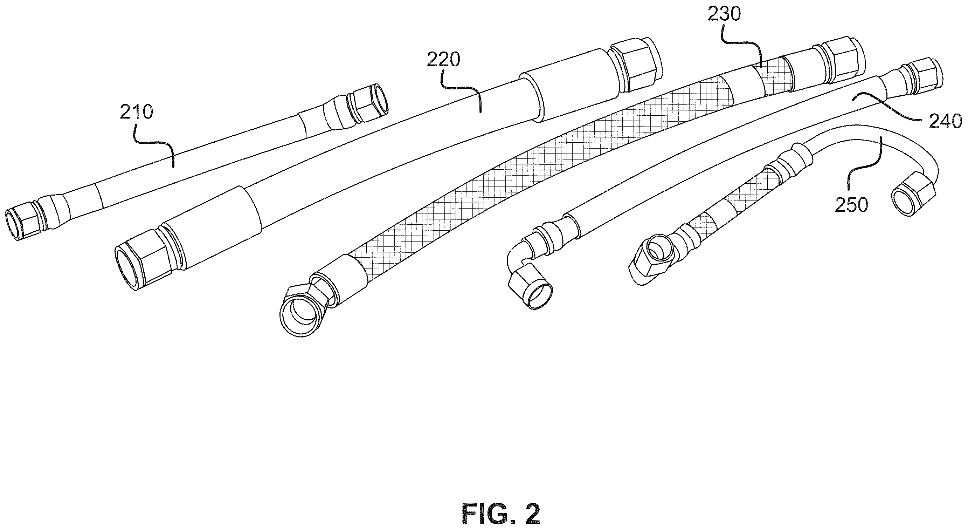

FIG. 2 shows several exemplary aerospace hose assemblies 210, 220, 230, 240, and 250.

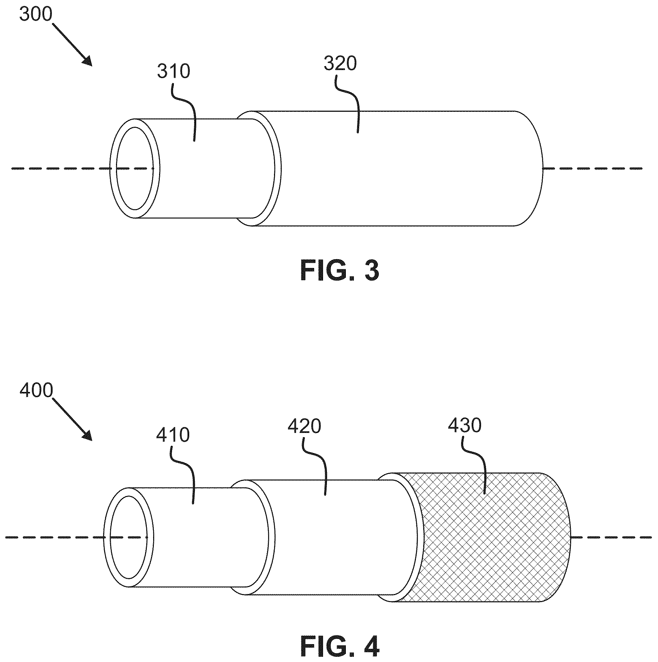

FIG. 3 shows an exemplary hose 300 comprising an innermost electrically conductive high-performance thermoplastic polymer composite layer 310 and an outer silicone rubber layer 320.
FIG. 4 shows an exemplary hose 400 comprising an innermost electrically conductive high-performance thermoplastic polymer composite layer 410, an outer silicone rubber layer 420, and an outermost braided metallic reinforcement layer 430.

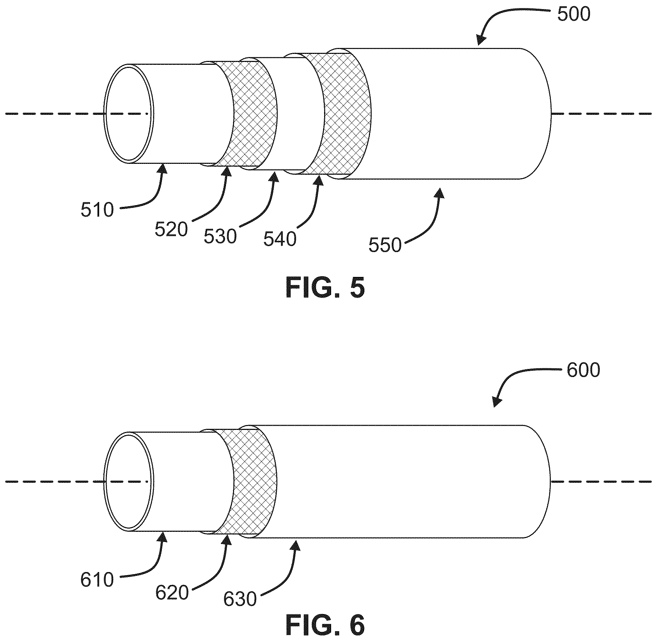

FIG. 5 shows an exemplary hose construction 100 comprising 5-layers. Hose 500 may include an inner electrically conductive layer prepared from a composition comprising a polyimide 510, an adhesive tie layer 520, a first silicone rubber layer 530, a reinforcement layer 540, and an outer insulating layer 550. The inner conductive layer 510 may comprise a single layer prepared from a composition comprising a polyimide, an electrically conductive filler, and optionally a pendant spacer molecule. The adhesive tie layer 520 may comprise a silicone-based adhesive. The first rubber layer 530 may be prepared from a composition that includes a silicone-based rubber. Layer 530 may be a heat-stabilized silicone rubber, or a construction comprising layers of silicone-based rubber, HNBR, and textile reinforcement in the form of aramid textiles, or PEEK textiles. In another form of the invention, layer 530 may be reinforced with the addition fillers in the form of chopped silane-sized glass or PEEK fibers. The reinforcement layer 540 may comprise a metallic braid or textile braid. The outer insulating layer 550 may comprise a foam silicone rubber, optionally having an inner metal foil.
FIG. 6 shows an exemplary hose construction 600 comprising 3-layers. Hose 600 may include an inner polyimide film electrically conductive layer 610, an adhesive tie layer 620, and an outer rubber layer 630. The conductive inner layer 610 can comprise a polyimide, an electrically conductive filler, and optionally a spacer molecule. The outer silicone layer 630 may comprise a first silicone rubber layer. Layer 630 may be a heat-stabilized silicone rubber, or a construction containing layers of silicone-based rubber, HNBR and textile reinforcement in the form of aramid textiles. or PEEK textiles. In another form of the invention, layer 630 may be reinforced with the addition fillers in the form of chopped silane-sized glass or PEEK fibers.

### DETAILED DESCRIPTION OF THE INVENTION

Typical prior art aerospace hose tubes can comprise a fluoropolymer PTFE tube as a double layer structure where inner layer is made of conducting PTFE composites. There is a need for material replacement to be complaint with EPA regulations. The inner conducting layer is used to dissipate the electrical charge accumulated at the tube surface, acting as an anti-static layer. Therefore, a conducting composite has been developed using a bio-sourced thermoplastic polymer, that eliminates use of PFAS, is EPA compliant, carries a minimum carbon footprint, and a low concentration of a conducting filler. The low or ultra-low concentration of filler will provide desired electrical conductivity for antistatic properties without impeding flexibility of the base material and be compliant with new EPA regulations.

The disclosure provides a PFAS-free hose constructed with at least three layers including a polyimide inner layer, and adhesive tie layer, and a protective silicone layer for strength and flame protection. The three-layer hose is suitable for use in fuel-and-chemical conveyance in aerospace. In some cases, the hose includes a chemically inert innermost layer comprising a polyimide film. This film can be conductive for static dissipation and chemically altered for greater elongation. A crosslinked silicone layer surrounds the film for strength & flame resistance. A layer of epoxy/silicone/acrylate adhesive acts as a tie layer. An outer foam-like silicone sleeve with an inner metal liner can be used for better insulation.

Current aerospace fuel hoses typically include a PTFE inner layer, which is a known hazardous material. Supply chain risks and environment regulations may hamper the economic availability of PTFE in the future. Therefore, a hose constructed from alternative non-PFAS containing materials has been developed. The multilayer hose structure described herein addresses the material need for a highly chemical resistant inner layer and a high-strength and flammability-resistant outer layer.

The disclosure provides a hose comprising at least three layers, or at least four layers. In some cases, the innermost layer is made of an aromatic polyimide film (< 1000 microns, < 1000 microns, < 750 microns, <500 microns, <300 microns, or <250 microns). The outer silicone layer comprises a crosslinked silicone or a polysiloxane or a VMQ rubber (referred to as the "silicone layer" here onwards) to provide high strength and high flame-resistance. Since polyimide and silicones face difficulty in adhering to each other, a third layer, called the tie layer, is included. This tie layer provides adhesion between the polyimide layer and the silicone layer and prevent delamination or stripping during service. The tie layer may include an epoxy, acrylic, or a silicone adhesive. Furthermore, adhesion between innermost layer and silicone layer can also be improved via chemical modification or surface treatment of the innermost layer or the silicone layer, or both. In addition, an outermost fourth layer can be incorporated to this structure in the form of a silicone foam (porous) which can include an inner metal foil. This fourth layer can surround silicone layer to provide even better insulation against a direct flame by inhibiting conductive and radiative heat transfer. In addition to chemical resistance to various aerospace fluids, resistance to highly aromatic hydrocarbon fuels such as the latest generation of Sustainable Aviation Fuels (SAFs), and resistance to a direct flame (2000 degrees F) for 15 minutes, the entire structure must exhibit flexibility, elongation and service within a temperature range of -65 to +450 degrees Fahrenheit (-53 degrees C to 232 deg C).

One of the drawbacks of polymers which exhibit excellent thermal and chemical resistance is their rigidity. Polyimide and other alternatives (PAI, PEI, PEEK, etc.) can each exhibit a low tensile elongation, a high tensile modulus, and a high flexural modulus. In other words, these materials are rigid and brittle, whereas the incumbent material (PTFE) is flexible and exhibits good elongation. To address this problem, the disclosure provides further modification to the polyimide resin by including pendant or spacer molecules (typically various types of diamines and synthesis processes are used) to create a flexible structure or aerogels. However, these structures may be porous and produce aerogels which have some surface roughness.

In some cases, the polyimide includes addition of carbon nanotubes (CNTs), reduced graphene oxide (rGO), and/or transition metal carbides or nitrides (MXenes) addition which can be used to improve the brittle-to-ductile transition & tensile elongation.

In some cases, the hose includes an appropriate adhesive tie-layer to improve adhesion between the innermost polyimide layer and the silicone layer.

In some cases, the hose includes an optional outer porous/foam-like insulation layer to protect the complete construction, and provides a method for improving the flexibility and elongation of polyimide for use in the flexible hose application.

The hose provides an alternative to PTFE in high-temperature and demanding applications in the aerospace industry. In doing so, it provides a more sustainable solution to the environmental and health hazards presented by PFAS containing materials. In some cases, the hose provides an alternative against supply chain risks with major PTFE suppliers exiting the business.

In some cases, the hose provides a PFAS-free alternative for environmentally conscientious customers.

In some cases, the hose comprises a thin innermost layer (100-1000 microns, 100-1000 microns, 100-750 microns, 100-500 microns, 100-300 microns, or 100-250 microns) of PI or PEEK, and/or an alternative thermoplastic polymer (e.g., PEI/PAI), which is subdivided into a separate innermost conductive layer (including, for example, one or more of CNT/graphene/h-BN/c-BN/graphite/GQD/etc.) and a nonconductive layer comprising PI or an alternative (PEEK/PEI/PAI).

In some cases, the polyimide is an aromatic polyimide due to its higher chemical and thermal resilience. In some cases, the innermost PI layer can be made more flexible by the choice of monomer type, cross-linking agent type, monomer mole fraction, number of main chain repeat units, and polymer concentration. Another method is to incorporate rGO/Mxene through melt-blending to produce structures with enhanced brittle-to-ductile transition.

In some cases, innermost layer can be extruded via melt-blending or solvent-casted onto the tie-layer or the silicone layer and then imidized.

Adhesion between innermost electrically conductive imidazole layer and the first silicone layer is important for performance. Adhesion may be promoted by modification of either the innermost electrically conductive imidazole layer and the first silicone layer by functionalization with (OH, COOH, NH, SiH) or through surface treatment (corona or plasma treatment), and/or an adhesive tie-layer. The adhesive tie layer can be a thin (<25 micron) layer of an epoxy, or a high-temperature functionalized silicone RTV/adhesive, or an acrylic adhesive to prevent delamination of innermost electrically conductive imidazole layer from the first silicone layer. Silicone layer can be a cured VMQ, PMDS, or P-Si that is modified for enhanced flame retardancy (possible and similar to RCF's Rishon) either though high temperature vulcanization (also curing or cross-linking) technologies or though additives.

In some cases, the hose structure includes a reinforcement layer for example, including a metallic braid, aramid, ultra-high molecular weight polyethylene (UHMWPE), carbon-fiber, ceramic, glass, metal, or other polymeric, or fabric layer. The reinforcement layer may be placed between innermost polyimide layer and the tie layer or between the tie layer and the first silicone layer or any other combination thereof for strength. In some cases, the first silicone layer may be covered by a fourth highly-porous silicone foam, optionally adhered to a metal foil for greater fire insulation.

### Definitions

The singular forms "a", "an" and "the" are intended to include the plural forms as well, unless the context clearly indicates otherwise.

The term "and/or" refers to and encompasses any and all possible combinations of one or more of the associated listed items.

The term "about," when referring to a measurable value such as an amount of a compound, dose, time, temperature, and the like, is meant to encompass variations of +/-10%, 5%, 1%, 0.5%, or even 0.1% of the specified amount.

The term "antistatic hose" refers to a hose having an electrically conductive inner layer that exhibits a surface resistivity at 100V of no more than 5 x 10^8 Ohms under ASTM D257. An "antistatic fuel hose" refers to an antistatic hose comprising an inner layer compatible with an aviation fuel such as a petroleum-based fuel, and petroleum and synthetic fuel blends. In some cases, the antistatic hose comprises an inner layer compatible with an aviation fuel. In some cases, the aviation fuel is elected from the group consisting of Jet A, Jet A1, Jet B, JP4, JP5, JP7, and JP8 fuels and their military derivatives. In some cases, the antistatic hose is compatible with an aerospace fluid selected from the group consisting of aviation fuels, oil, hydraulic fluids including synthetic fluids such as phosphate ester hydraulic fluids (e.g., a SKYDROL^{™} aviation hydraulic fluid, Eastman Aviation; SAF MIL-83282 Hydraulic Fluid synthetic hydrocarbon hydraulic fluid, Castrol Brayco or Royco), coolants, and deicing fluids.

The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms, including technical and scientific terms used in the description, have the same meaning as commonly understood by one of ordinary skill in the art to which this disclosure belongs. In the event of conflicting terminology, the present specification is controlling.

The term "pendant" refers to a polymer side chain such as an oligomeric branch offshoot from a polymeric molecule. See IUPAC Glossary of Basic Terms in Polymer Science, Pure and Applied Chemistry 68, 2287-2311, 1996, p. 2297. In some cases, the pendant spacer molecules are diamine symmetrical molecules. In some cases, the diamine symmetrical molecules have a molecular weight (MW) of from about 500 to about 1500 g/mol.

The term "high-performance thermoplastics" refers to a class of thermoplastic polymers having the ability to withstand high temperatures, chemical and corrosive environments, and mechanical stress. The high-performance thermoplastics maintain structural integrity and mechanical properties at elevated temperatures up to and above above 232 deg C (450 deg F) and short-term temperatures of at least 250 deg C (482 deg F), or at least 260 deg C (500 deg F), even under demanding circumstances. The high-performance thermoplastics can be non-halogenated high-performance thermoplastic polymers. In some cases, the high-performance thermoplastic polymers can be selected from polyimide (PI), polyetherketone (PEK), polyetheretherketone (PEEK), polyetherether ketoneketone (PEEKK), polyetherketoneketone (PEKK), and polyetherketone etherketoneketone (PEKEKK), and polyphenylene sulfide (PPS).

Unless otherwise specified, the term "room temperature" refers to about 73 °F (23 °C).

All patents, patent applications and publications referred to herein are incorporated by reference in their entirety.

The embodiments described in one aspect of the present disclosure are not limited to the aspect described. The embodiments may also be applied to a different aspect of the disclosure as long as the embodiments do not prevent these aspects of the disclosure from operating for its intended purpose.

### Compositions

An electrically conductive thermoplastic polymer composition is provided comprising a thermoplastic polymer and an electrically conductive filler. The composition is useful in providing a thin thermoplastic polymer innermost layer for a PFAS-free hose. The electrically conductive thermoplastic polymer inner layer is suitable for contact with chemicals and aromatic hydrocarbons. The thermoplastic polymer inner layer is suitable for fuel and chemical conveyance, for example, in aerospace applications. In some cases, the thermoplastic polymer is selected from the group consisting of PI, PAI, PEEK, PEKK, PA46, PPA, and PA11. In some cases, the thermoplastic polymer comprises a polyimide. In some cases, the thermoplastic polymer is a polyimide. In some cases, the thermoplastic polymer comprises a polyimide and an additional thermoplastic polymer selected from the group consisting of PAI, PEEK, PEKK, PA46, PPA, and PA11.

In some cases, the high-performance thermoplastic polymer is a polyaryletherketone (PAEK). In some cases, the PAEK is selected from the group consisting of PEK, PEEK, PEEKK, PEKK, and PEKEKK. The polyaryletherketones (PAEKs) are commercially available, for example, from VICTREX. In some cases, the PAEK is selected from VICTREX^{™} PEEK, VICTREX HT^{™} (PEK), and VICTREX ST^{™} (PEKEKK). In general, as the ratio of ketone-to-ether increases, so does the glass transition temperature (Tg) and the melting point (Tm).

In some cases, the high-performance thermoplastic is a polyimide (PI). Polyimide (PI) exhibits very good high-temperature resistance. Polyimide polymers are commercially available. In some cases, the polyimide polymer is produced by condensation of a dianhydride and a diamine. In some cases, the dianhydride is selected from the group consisting of pyromellitic dianhydride (PMDA), 1,4,5,8-naphthalene tetracarboxylic acid dianhydride (NTCDA), 3,3',4,4'-biphenyltetracarboxylic dianhydride (BPDA), and benzophenone-3,3',4,4'-tetracarboxylic dianhydride (BTDA). In some cases, the diamine is selected from the group consisting of 4,4'-oxydianiline (ODA), 4,4'-diaminodiphenyl ether (DAPE), 3,4'-oxydianiline, p-phenylenediamine (PDA), meta-phenylene diamine (MDA), 3,3'-diaminodiphenylmethane (DDM), and 5(6) -Amino-1-(4-aminophenyl)-1,3,3, trimethylindane (DAPI). In some cases, the polyimide polymer is selected from the group consisting of poly (pyromellitic dianhydride-oxydianiline [PMDA-ODA], poly (3,3',4,4'-biphenyltetracarboxylic dianhydride-phenylene diamine [BPDA-PDA], and 5(6) -Amino-1-(4-aminophenyl)-1,3,3, trimethylindane-benzophenonetetacarboxylic dianhydride copolymer [BTDA-DAPI].

In some cases, the high-performance thermoplastic is a PEEK. PEEK exhibits good mechanical and chemical properties, excellent thermal stability, and wear resistance. In some cases, the high-performance thermoplastic is a PEK. PEK can exhibit higher strength and thermal degradation resistance than PEEK. In some cases, the high-performance thermoplastic is a PEEKK. In some cases, the high-performance thermoplastic is a PEKK. PEKK is similar to PEEK but with higher operating temperature. In some cases, the high-performance thermoplastic is a PEKEKK. PAEKs are commercially available, for example, from VICTREX, such as for example, VICTREX^{™} PEEK, VICTREX HT^{™} (PEK), VICTREX ST^{™} (PEKEKK).

In some cases, the innermost layer of the hose is prepared from a composite composition comprising one or more high-performance thermoplastic polymers in a combined amount from 90-99.8 wt%, 93-99.6 wt%, or 95-99.5 wt%.

### Polyimide Compositions

An electrically conductive polyimide composition is provided comprising a polyimide polymer and an electrically conductive filler. The composition is useful in providing a thin polyimide innermost layer for a PFAS-free hose. The polyimide inner layer is suitable for contact with chemicals and aromatic hydrocarbons. The polyimide inner layer is suitable for fuel and chemical conveyance, for example, in aerospace applications.

In some cases, a conducting polyimide polymer composition is provided comprising a polyimide polymer and an electrically conductive filler. In some cases, a polyimide composition is provided comprising a polyimide polymer, an electrically conductive filler. In some cases, the composition comprises one or more spacer molecules. The spacer molecules can be pendant spacer molecules. In some cases, a polyimide composition is provided comprising a polyimide polymer, an electrically conductive filler, and one or more spacer molecules. In some cases, the spacer molecules are diamine symmetrical molecules. In some cases, the polyimide polymer composition does not include a fluoropolymer such as PFAS. In some cases, the polyimide has a thermal conductivity of about 0.22 W/m-C by ASTM E1530. In some cases, the polyimide has a melt temperature of 380-405 deg C.

An electrically conductive polyimide polymer composition is provided prepared from composition comprising a polyimide or PEEK, an electrically conductive filler, and optionally one or more of a spacer molecule, dispersing and processing additive, and an additional thermoplastic polymer. One or more additional additives may optionally be included.

An electrically conductive composite composition is provided for preparing the innermost layer of the hose comprising one or more high-performance thermoplastic polymers and carbon nanotubes. In some cases, the innermost electrically conductive layer is prepared from a composite composition comprising one or more high-performance thermoplastic polymers, carbon nanotubes (CNTs) comprising a high aspect ratio, and a dispersing and processing additive. In some cases, the composite composition comprises one or more high-performance thermoplastic polymers, carbon nanotubes (CNTs) comprising a high aspect ratio, a dispersing and processing additive, and one or more additional additives. In some cases, the innermost layer is prepared from an electrically conductive composite composition according to Table 1A or 1B.

**Table 1A. Exemplary Conductive Polyimide Compositions**

| Function | Composition (wt%) | | |
|---|---|---|---|
| | Formula A | Formula B | Formula C |
| Polyimide or PEEK and optional additional thermoplastic polymer | 90-99.8 | 93-99.6 | 95-99.5 |
| Electrically conductive filler | 0.01-5.0 | 0.1-4.0 | 0.2-3.0 |
| dispersing and processing additive | 0-5.0 | 0.1-3.0 | 0.25-2.0 |
| Spacer molecule | 0-10.0 | 0.1-2.0 | 0.2-1.0 |

**Table 1B. Conductive composite compositions for preparing innermost layer**

| Function | Composition (wt%) | | |
|---|---|---|---|
| | Formula A | Formula B | Formula C |
| High-performance thermoplastic polymer(s) | 90-99.8 | 93-99.6 | 95-99.5 |
| High aspect ratio | 0.1-5.0 | 0.2-4.0 | 0.25-3.0 |
| CNTs | | | |
| Dispersing and processing additive | 0.1-5.0 | 0.2-3.0 | 0.25-2.0 |

In some cases, the innermost layer is prepared from a composite composition comprising 90-99.8 wt% of the high-performance thermoplastic polymer, 0.01-5.0 wt% of the electrically conductive filler, and 0-5.0 wt% of the dispersing and processing additive. In some cases, the innermost layer is prepared from a composite composition comprising 90-99.8 wt% of the high-performance thermoplastic polymer, 0.1-5.0 wt% of the electrically conductive filler, and 0.1-5.0 wt% of the dispersing and processing additive. In some cases, the innermost layer is prepared from a composite composition comprising 93-99.6 wt% of the high-performance thermoplastic polymer, 0.1-4.0 wt% of the electrically conductive filler, and 0.1-5.0 wt% of the dispersing and processing additive. In some cases, the electrically conductive inner layer can be prepared from a composition comprising 93-99.6 wt% of a high-performance thermoplastic polymer, 0.2-4.0 wt% of electrically conductive fillers, and 0.2-3.0 wt% of a dispersing and processing additive. In some cases, the electrically conductive inner layer can be prepared from a composition comprising 95-99.5 wt% of a high-performance thermoplastic polymer, 0.25-3.0 wt% of electrically conductive fillers, and 0.25-2.0 wt% of a dispersing and processing additive.

In some cases, the electrically conductive inner layer can be prepared from a composition comprising 90-99.8 wt% of a high-performance thermoplastic polymer, 0.1-5.0 wt% of carbon nanotubes, and 0.1-5.0 wt% of a dispersing and processing additive. In some cases, the electrically conductive inner layer can be prepared from a composition comprising 93-99.6 wt% of a high-performance thermoplastic polymer, 0.2-4.0 wt% of carbon nanotubes, and 0.2-3.0 wt% of a dispersing and processing additive. In some cases, the electrically conductive inner layer can be prepared from a composition comprising 95-99.5 wt% of a high-performance thermoplastic polymer, 0.25-3.0 wt% of carbon nanotubes, and 0.25-2.0 wt% of a dispersing and processing additive.

### Polyimides

Polyimide is a polymer comprising imide groups. Polyimides can include aliphatic polyimides, semi-aromatic polyimides, aromatic polyimides. In some cases, the polyimide is an aromatic polyimide. Polyimides are commercially available.

In some cases, the polyimide is produced by condensation of a dianhydride and a diamine. In some cases, the dianhydride can be selected from the group consisting of pyromellitic dianhydride (PMDA), benzoquinonetetracarboxylic acid dianhydride, 1,4,5,8-naphthalene tetracarboxylic acid dianhydride (NTCDA), 3,3',4,4'-biphenyltetracarboxylic dianhydride (BPDA), or benzophenone-3,3',4,4'-tetracarboxylic dianhydride (BTDA). In some cases, the diamine can be 4,4'-oxydianiline (ODA), 4,4'-diaminodiphenyl ether (DAPE), 3,4'-oxydianiline, p-phenylenediamine (PDA), meta-phenylene diamine (MDA), 3,3'-diaminodiphenylmethane (DDM), or 5(6) -Amino-1-(4-aminophenyl)-1,3,3, trimethylindane (DAPI).

For example, in some cases, the polyimide can be produced by condensation of pyromellitic dianhydride (PMDA) and 4,4'-oxydianiline (ODA), for example, is Kapton K or HN. In some cases, the polyimide a mix of two dianhydrides PMDA and biphenyltetracarboxylic acid dianhydride, and two diamines, ODA and p-phenylenediamine (PPD), for example, is Kapton E.

In some cases, the polyimides can include poly (pyromellitic dianhydride-oxydianiline [PMDA-ODA], poly (3,3',4,4'-biphenyltetracarboxylic dianhydride-phenylene diamine [BPDA-PDA], and 5(6) -Amino-1-(4-aminophenyl)-1,3,3, trimethylindane-benzophenonetetracarboxylic dianhydride copolymer [BTDA-DAPI].

In some cases, the polyimide is a thermoplastic polyimide resin. Thermoplastic polyimides are commercially available, for example as EXTREM^{™} Resin VH 1003M, Sabic.

In some cases, the polyimide does not include a fluoropolymer.

In some cases, the polyimide has a thermal conductivity of about 0.22 W/m-C by ASTM E1530. In some cases, the polyimide has a melt temperature of 380-405 deg C.

In some cases, the innermost polyimide layer is prepared from a composition comprising an polyimide and optionally one or more additional polymers in a combined amount from 90-99.8 wt%, 93-99.6 wt%, or 95-99.5 wt%.

### Additional Polymers

In some cases, the innermost layer is a polyimide layer prepared from a composition comprising a polyimide. In some cases, the innermost layer is a polyimide composite comprising a polyimide and an additional polymer.

In some cases, the additional polymer may be a thermoplastic polymer. In some cases, the thermoplastic polymer can be selected from polyamide (PA6/66, PA46, PA11), polyphthalamide (PPA), polyetherimide (PEI), polyamide-imide (PAI), polyaryletherketone (PAEK), polyetherketone (PEK), polyetherketoneketone (PEKK), and polyetheretherketone (PEEK). In some cases, the additional polymer contains a blend of two or more thermoplastic polymers. In some cases, a single bio-based thermoplastic polymer is employed.

In some cases, the additional polymer is selected from a polyphthalamide (PPA), polyamide (PA), polyether ketone ketone (PEKK), or polyether ether ketone (PEEK).

PPA is commercially available, for example, as Amodel^{®} PPA, Solvay Specialty Polymers, Alpharetta, GA, or as Rilsan^{®} PPA, Arkema produced from a renewable source. In some cases, the PPA is Rilsan^{®} HT CESV Black P010 TL.

In some cases, the PA may be a PA46. PAs are commercially available, for example, PA46 is available as Stanyl^{®} TW441, Envalior.

In some cases, the PEKK can be a Kepstan^{®}, Arkema PEKK. In some cases, the PEEK can be a KetaSpire^{®} KT-820, Solvay Specialty Polymers. In some cases, the PAEK can be a Victrex^{®} PEEK polymer.

In some cases, the additional polymer is a bio-based additional polymer. Bio-based polyamides are commercially available. For example, ECOPAXX^{®} from Envalior is a bio-based polyamide. ECOPAXX^{®} PA 410 contains 72% bio-based carbon content derived from castor plants. VESTAMID^{®} Terra from Evonik includes PA 610 and PA 1010 grades. The PA 610 grade has a 62% bio-renewable content. RILSAN^{®} polyamide 11 from ARKEMA is made from 100% renewable castor oil. RILSAN^{®} PA11 has 89% bio-based carbon content under ASTM D6866. Bio-based PPA is available as AMODEL^{®} Bios from SYENSQO.

In some cases, the bio-based polyamide falls under the PA11-PHLY category under DIN 73378. In some cases, the bio-based polyamide fulfills all specifications according to DIN 74324, ISO 7628, NFR 12632, and SAEJ844. In some cases, the bio-based polyamide exhibits a tensile modulus in a range of 500 to 600 MPa, 550 to 650 MPa under ISO 527-1/-2.

In some cases, the bio-based polyamide exhibits a Charpy notched impact strength in a range of 60-70 kJ/m2 at 23 deg C under ISO 179/1eA.

In some cases, the thermoplastic polymer is a bio-based polyamide 11. Bio-based polyamide 11 can be produced from renewable sources such as castor oil. Castor beans contain castor oil and about 90 percent of this oil is comprised of ricinoleic acid. The ricinoleic acid can be mixed with methanol, hydrogen bromide and ammonia to form 11-aminoundecanoic acid, which can be polymerized into polyamide 11.

Bio-based polyamides are commercially available, for example, RILSAN^{®} polyamide 11 resin is available from Arkema. In some cases, the bio-based polyamide can include a UV stabilizer. In some cases, the bio-based polyamide can include a heat stabilizer. In some cases, the bio-based polyamide can include a plasticizer. In some cases, the bio-based polyamide does not include a plasticizer.

### Electrically Conductive Fillers

In some cases, a conducting polyimide polymer composition is provided comprising a polyimide polymer and an electrically conductive filler.

Electrical conductivity can be achieved by creating an interconnected network of conductive fillers in the polymer matrix. However, level of electrical conductivity is dependent on physical properties of the filler, aspect ratio, conductivity, compatibility with polymer matrix and dispersion efficiency.

The aspect ratio (L/D) of an object is defined as the ratio of its longest dimension to shortest dimension. For rodlike particles, such as carbon fibers or carbon nanotubes, the aspect ratio is the ratio of the length to the diameter (L/D). Higher aspect ratio fillers percolate at lower loadings due to more efficient network formation with fewer contacts required to form a spanning cluster. The aspect ratio of the filler can have an effect on the electrical percolation properties of the polymer composites. The electrical percolation threshold is the critical reinforcement concentration where the composite turns abruptly from insulator to conductor as conductive pathways are formed.

Currently, in aerospace hoses, PTFE filled with carbon black is typically used to achieve desired electrical conductivity. Carbon black (CB) particles are spherical and have aspect ratio of one. Therefore, a relatively high concentration of CB is required to create conductive interconnected network in the polymer matrix to achieve desired electrical conductivity. This higher concertation of CB can impact the flexibility of the material. Moreover, conductive filler can be expensive, so a higher concentration of filler in final composition can increase the material cost. To address these issues, a high aspect ratio carbon nanotubes can be employed as an electrically conducting filler. In some cases, using a higher aspect ratio filler can provide interconnected network at lesser filler concentration compared to short and low aspect ratio fillers. With the help of optimized processing parameters, desired electrical conductivity can be achieved at low or ultralow concertation of CNTs keeping material flexibility intact.

To address these issues, an electrically conducting filler having a higher aspect ratio can be employed. With the help of optimized processing parameters, desired electrical conductivity can be achieved at low or ultralow concertation of electrically conductive filler keeping material flexibility intact.

### Electrically Conductive Fillers

The innermost thermoplastic layer is designed to be electrically conductive, for example, to enhance performance as an anti-static layer. The composite composition includes one or more electrically conductive fillers. The electrically conductive fillers can include carbon nanotubes (CNTs), reduced graphene oxide (rGO), MXene composition, carbon black, carbon fiber, graphite, graphene, stainless-steel fibers, and/or silver nanowires. In some cases, the electrically conductive filler is selected from the group consisting of carbon nanotubes, graphene, carbon black, reduced graphene oxide (rGO), MXene composition, carbon fiber, and graphite.

In some cases, the electrically conductive filler has a high aspect ratio. In some cases, the electrically conductive filler has a high aspect ratio of >50, >100, >500, > 1,000, or >1,500.

Non-limiting examples of conductive fillers with high aspect ratios include carbon nanotubes, carbon fibers, graphite flakes, silver nanowires.

The electrically conductive filler can be a carbonaceous filler. In some cases, the carbonaceous filler can be a carbon nanotube, carbon black, carbon fiber, rGO, graphite, or graphene.

### Carbon Nanotubes

The innermost thermoplastic layer is designed to be electrically conductive, for example, to enhance performance as an anti-static layer. In order to increase electrical conductivity, it was found that use of carbon nanotubes (CNTs), and in particular, high aspect ratio CNTs, were particularly useful. The electrically conductive filler can include one or more carbon nanotubes. In some cases, the carbon nanotubes have a high aspect ratio of >500, > 1,000, >1,500, >5,000, or > 10,000. The carbon nanotubes can comprise single-walled carbon nanotubes (SWCNTs) and/or multi-walled carbon nanotubes (MWCNTs). In some cases, the carbon nanotubes have a high aspect ratio. In some cases, the carbon nanotubes have a high aspect ratio of >500, > 1,000, >1,500, >5,000, or > 10,000. In some cases, the aspect ratio value is in a range having a median value as defined above. In some cases, the carbon nanotubes have a bulk density in a range of 0.04 to 0.4 g/cm3, 0.07 to 0.35 g/cm3, 0.1 to 0.25 g/cm3, or about 0.13-0.23 g/cm3 under ASTM D7481. In some cases, the carbon nanotubes have a surface area on a range of 200-500 m2/g; 250-350 m2/g, or about 290 m2/g under ASTM D6556. Carbon nanotubes are commercially available.

In some cases, the conductive filler includes a MXene compound. MXene compounds have a 2D structure, for example, having the general formula Mn+1XnTx, where M is an early transition metal (Ti, V, Nb, etc.), X is C and/or N, Tx are the surface terminations (typically -O, -OH, -Cl, and -F), and n = 1-4. For example, in some cases, the MXene can be Ti₃C₂. MXenes are becoming commercially available, for example, from Japan Material technologies Corporation, or Samsung. See also Naguib et al. 2011, Advanced Materials vol. 23, Iss. 37, pp. 4248-4253.

In some cases, the conductive filler includes a reduced graphene oxide (rGO). rGO is commercially available, for example, as a powder from ACSMaterial^{®}, Advanced Chemical Supplier.

In some cases, the electrically conductive thermoplastic polymer composition comprises 0.01-5.0 wt%, 0.1-4.0 wt%, 0.2-3.0 wt%. or 0.25-2.0 wt% of the electrically conductive filler.

### Spacer Molecules

In some cases, a polyimide composition is provided comprising a polyimide polymer and one or more spacer molecules. The spacer molecules may be pendant spacer molecules. The pendant spacer molecules can help impart flexibility. In some cases, the pendant spacer molecules are diamine symmetrical molecules. In some cases, the diamines are aliphatic diamines. In some cases, the diamines are C₂₋₁₂ aliphatic diamines, for example, 1,2-ethylene diamine through 1,12-dodecanediamine. In some cases, the diamines are aromatic diamines, such as ODA. In some cases, the diamine symmetrical molecules have a molecular weight (MW) of from about 500 to about 1500 g/mol. In some cases, the polyimide composition comprises 0-5.0 wt%, 0.1-4.0 wt%, or 0.5-3.0 wt% of the spacer molecules.

### Additives

The electrically conductive innermost thermoplastic layer is prepared from a composition that can optionally include one or more dispersing and processing additives ("processing additives"). In some cases, the dispersing and processing additives may be selected from the group consisting of polyhedral oligomeric silsesquioxanes (POSS), silanes, and silanol-POSS. The dispersing additive may be used to improve the dispersion of the additives throughout the polymer matrix. In some cases, the dispersing and processing additive is selected from the group consisting of a trisilanol isobutyl POSS, trisilanol isooctyl POSS, octaisobutyl POSS, trisilanol phenyl POSS, trichlorosilane (SiHCl₃), tetramethylsilane (Si(CH₃)₄), and tetraethoxysilane (Si(OCH₂CH₅)₄). In some cases, the dispersing and processing additive is selected from the group consisting of trisilanol phenyl POSS, trisilanol isobutyl POSS, and octaisobutyl POSS. The POSS compounds may be purchased commercially, for example, from Hybrid Plastics. In a specific composition, the dispersing and processing additive is a POSS compound. The POSS may be TriSilanol Phenyl POSS. The POSS may be a TriSilanol Isobutyl POSS. The POSS may be a OctaIsobutyl POSS. The silane can be an organosilicone compound such as trichlorosilane (SiHCl₃), tetramethylsilane (Si(CH₃)₄), tetraethoxysilane (Si(OCH₂CH₅)₄). Dispersing and processing additives are commercially available. For example, trisilanol phenyl POSS (SO1458) is available from Hybrid Plastics^{®}. For example, trisilanol isobutyl POSS (SO1450) is available from Hybrid Plastics^{®}. The conductive polymer composite material can be prepared from a composition comprising from 0-5.0 wt%, 0.1 to 5.0 wt%, 0.2 to 3.0 wt%; or 0.25-2.0 wt% of the dispersing and processing additive based on the weight of the composition.

In some cases, the electrically conductive innermost polyimide layer is prepared from a composition that can comprise an additional additive. The additional additive can be selected from the group consisting of a UV stabilizer, light stabilizer, antioxidants, plasticizer, heat stabilizer, pigment, flame retardant, mechanical filler, lubricant, chain extender, chain cutter, and impact modifier. Various additional additives are commercially available, for example, from Bruggemann Chemical U.S., Inc., Newtown Square, PA. In some cases, antioxidants can be selected from the group consisting of copper-salt compounds, phenolics, and phosphite-based antioxidants. In some cases, the conductive polymer composite is prepared from a composition that may comprise one or more additional additives in a range of 0-5 wt%, 0.05-4 wt%, 0.1-3 wt%, or 0.5-2 wt% one or more combined additional additives.

### Adhesive tie layer compositions

In some cases, the hose comprises a tie layer between the innermost electrically conductive layer and the outer silicone rubber layer. The tie layer can be a thin (<25 micron) adhesive layer. In some cases, the adhesive layer can be an epoxy, or a high-temperature functionalized silicone RTV/adhesive, or an acrylic adhesive. In some cases, epoxy adhesive can have limited adhesiveness to thermoplastic polymer film layer so various surface treatments may be employed including ion beam, plasma treatment, or chemical treatment. The tie layer serves to prevent delamination of the innermost electrically conductive high-performance thermoplastic layer from the outer silicone rubber layer. Referring to FIG. 6, the hose comprises a tie layer 620. The tie layer 620 serves to prevent delamination of the innermost polyimide film layer 610 from the first silicone layer 630.

### Silicone Rubber Outer Layer

A silicone composition is provided for preparing an outer layer of the hose comprising one or more silicone rubbers, structural fillers, a flexibility modifier, a crosslinking agent, and a heat stabilizer. In some cases, the silicone composition further comprises one or more, or two or more, fire retardant additives.

### Silicone compositions

The silicone layer can be prepared from a silicone composition. Silicone rubbers are prepared from synthetic polymers comprising a siloxane. Several types of silicones are available. The silicone layer composition can comprise one of more types of silicone.

Silicone rubbers, or polysiloxanes, have an inorganic main chain, for example, (-O-Si-O-Si-O-Si-O-), with organic side chains attached to the Si atoms. For example having general main chain chemical formula -[R₂SiO]n-, where R =alkyl (methyl, ethyl) or phenyl groups. In contrast, other non-silicone rubbers have a carbon-hydrogen organic main chain, for example, (-CH-CH-CH-CH-CH-), for example, having an organic side groups.

Common types of silicone include methyl silicone (MQ), vinyl methyl silicone (VMQ), phenyl methyl silicone (PVMQ), and polydimethylsiloxane (PDMS). PDMS can comprise a chemical formula, for example. of CH_{3[}Si(CH₃)₂O]ₙSi(CH₃)₃ or H₂N(CH₂)₃Si(EtO)₂O[Si(CH₃)₂O]ₙSi(EtO)₂(CH₂)₃NH₂ where n is the number of repeating [Si(CH₃)₂O] units. In some cases, the silicone layer composition comprises a non-fluorinated silicone. In some cases, the silicone layer composition comprises a PDMS, PVMQ, MQ, or VMQ silicone. In some cases, the silicone layer composition comprises a PDMS or VMQ silicone. In some cases, the silicone does not include a fluorosilicone (FVMQ).

In some cases, the silicone layer is a thermal insulating layer and can be prepared from a composition comprising a silicone base rubber selected from one or more of a VMQ, PVMQ, and/or PDMS. The silicone rubber can be a non-halogen silicone rubber. Properties of VMQ silicone rubbers include soft, low viscosity, good low temperature flexibility, excellent heat resistance, good electrical properties and medium oil resistance. Curatives for silicone rubbers may include peroxides or addition (platinum) curing systems. Silicone rubbers are commercially available. In some cases, the silicone rubber can be an ELASTOSIL^{®} silicone, Wacker Chemie AG, Munich Germany; or a Shin-Etsu silicone, Shin-Etsu Chemical Co., Ltd, Shin-Etsu Silicones of America, Inc., Akron, Ohio.

### Structural Fillers

In some cases, the silicone rubber can be reinforced using structural fillers. In some cases, the structural fillers can be precipitated SiO₂, fumed silica SiO₂, ground silica SiO₂, chopped glass, or chopped fibers, such as PAEK fibers, such as chopped PEEK fibers. In some cases, the structural fillers are selected from precipitated SiO₂, fumed silica, or ground silica SiO₂ filler. The structural fillers may be employed at from about 0-50 phr, 1-45 phr, 5-40 phr, 20-40 phr, 1-20 phr, 5-15 phr, or about 10-12 phr of the silicone rubber composition.

### Flexibility Modifiers

In some cases, the silicone rubber can be prepared from a composition comprising a flexibility modifier. Flexibility modifiers can include modifies silicone fluids. Modified silicone fluids such as carbinol-modified silicones and carboxyl-modified silicones can enhance flexibility of the silicone rubber. In some cases, the flexibility modifying additive is a hydroxyl-terminated silicone fluid. The flexibility modifying additive can be, for example, a hydroxyl-terminated PDMS, hydroxyl-terminated vinyl silicone, hydroxyl-terminated methyl-phenyl silicone, hydroxyl-terminated phenyl silicone, or hydroxyl-terminated polymethyl(3,3,3-trifluoropropyl)siloxane fluid. In some cases, the flexibility modifying additive is a hydroxyl terminated linear polydimethylsiloxane. In some cases, the flexibility modifying additive is a silanol silicone fluid. The flexibility modifying additive can improve processing performance, resistance to fuels and chemicals, and high temperature stability. The flexibility modifying additive can be 2-20 phr, 3-15 phr, or 5-10 phr compared to the silicone rubber.

In some cases, the heat stabilizer is selected from the group consisting of ferric oxide, Fe₂O₃, ceric oxide, CeO₂, and a combination thereof.

Processing additives may be employed, for example, to improve extrusion. Properties of the silicone rubber include good thermal properties and resistance to high and low temperatures, for example, a service temperature from about -110 to 250 °C. Processing additives can include aluminum hydroxide, or proprietary XIAMETER^{™} RBM 9000, 9001, 9004, 9003, 9010, which may also be added to improve extrusion. Properties of the silicone rubber include good thermal properties and resistance to high and low temperatures, for example, a service temperature from about -110 to 250 °C. The silicone rubber exhibits the widest service temperature of all the rubbers and maintains physical properties even at high temperature. Electrical properties may include very good insulation and dielectric properties, high dielectric strength, excellent arc and tracking resistance. Physical properties may include medium to low tensile strength and tear properties, very good compression set resistance. Environmental properties may include very good resistance to oxidation, ozone and weathering, high radiation resistance, medium to good resistance to chemicals and oils. Other desirable properties may include water repellency, good flame resistance with non-toxic combustion properties.

The silicone rubber base composition may also include one or more additional additives. Suitable additional additives may include, but are not limited to, curing agents, process aids, adhesion promoters, antioxidants, ultraviolet light stabilizers, fillers, thixotropic agents, flexibility modifiers, additional silicones, dyes/colorants, high temperature waxes such as bisamide waxes (e.g., ethylene bis(stearamide)) or silicone oil waxes, for example, to impart internal lubricity and pigment wetting and dispersion, and combinations thereof.

### Crosslinking Agents

The silicone rubber composition may also include various crosslinking agents. The crosslinking agent also known as a curing agent can include peroxides or addition (platinum) curing systems to impart crosslinking in the silicone base rubber. Crosslinking, also known as curing, is a process that transforms silicone rubber from a liquid or viscous state into a solid, elastic material. In some cases, the curing agent is a peroxide. The peroxide can be used to create free radicals. The free radicals react with the silicone chains forming crosslinks (bonds) creating a three-dimensional network. The crosslinking agent can be an organic peroxide. When heated the peroxides decompose generating free radicals. The free radicals abstract hydrogen atoms from the silicone chains creating active sites. The radicals react with other active sites on different silicone chains forming crosslinks. As crosslinks form, the entangled silicone chains become interconnected creating a three-dimensional network. The number of crosslinks per unit volume of the rubber can affects its properties including tensile strength, elongation, hardness.

In some cases, the curing or crosslinking agent can be, for example, benzoyl peroxide, dicumyl peroxide, ditertiarybutyl peroxide, paramethylbenzoyl peroxide, di(2,4-dichlorobenzoyl)peroxide, or 2,5-dimethyl-2,5-di(tert-butylperoxy)hexane. The silicone rubber base composition may also include various curing agents, including but not limited to, for example, a 50% paste of bis-(2,4-dichlorobenzoyl)-peroxide in silicone fluid, dicumyl peroxide, or a 45% paste of 2,5-bis-(t-butylperoxy)-2,5-dimethyl-hexane in silicone rubber. The curing agent may be present at from about 0.1-5.0 wt%, 0.25-5 wt%, 0.5-4 wt%, 1-3 wt%, 0.1-3 wt%, 0.3-1 wt% or 0.3-3 phr, or 0.5-1.5 phr of the silicone rubber composition. A further organic peroxide may be employed in the composition. The organic peroxide may be, for example, a monofunctional organic peroxide. The organic peroxide may be, for example, di(2,4-dichlorobenzoyl) peroxide. The organic peroxide may be present at, for example, 0-5 wt%, 0.1-3 wt%, or 0.5-2 wt% of the thermal insulating composition.

The silicone rubber base composition may also include various fillers, such as a ground silica SiO₂ filler. The fillers may be employed at from about 0-30 wt%, 1-20 wt%, 5-15 wt%, or about 10-12 wt% of the thermal insulating composition.

The silicone rubber base composition may also include various pigments or colorants for example at 0.1 to 5 wt%, 0.2-3 wt% of the composition.

Various additional additives such as antioxidants, process aids, or additional fire retardants may be employed in the thermal insulation composition, for example at about 0-3 wt%, or 0.1-2 wt%.

### Fire retardant additives

In some cases, the silicone rubber composition includes one or more or two or more fire retardant additives. In some cases, the flame retardant additive is a halogen-free fire retardant additive. In some cases, the fire retardant additive is selected from the group consisting of ammonium polyphosphate (APP), melamine polyphosphate (MPP), aluminum trihydroxide (e.g., Martinal^{®} ATH, Huber), magnesium hydroxide (e.g., Magnifin^{®} MDH, Huber), tricresyl phosphate (e.g., PhosGard^{®} TCP, Chempoint^{®}), platinum-based flame retardants, and a phosphorus/nitrogen complex intumescent flame retardant (e.g., PhosGard^{®} 700, Chempoint^{®}). In some cases, an intumescent fire retardant is included. The silicone rubber composition can include 0-40 phr, 6-40 phr, 10-30 phr, or 12-24 phr of one or more or two or more combined fire retardant additives.

Representative silicone rubber compositions are shown in Tables 2, 3 and 4.

**Table 2. Exemplary Silicone Compositions**

| **Description** | **Silicone A** | **Silicone B** |
|---|---|---|
| Silicone Base rubber | 40-99.5 | 50-80 |
| Flame Retardants | 0-20 | 5-15 |
| Structural Filler | 0-20 | 5-15 |
| Curing agent dicumyl peroxide | 0.1-3.0 | 0.2-2.0 |
| pigment | 0-5.0 | 0.1-3.0 |
| organic peroxide | 0.1-2.0 | 0.5-1.5 |

**Table 3. Silicone Rubber Compositions**

| Component | Silicone Rubber formulation A | Silicone Rubber formulation B |
|---|---|---|
| Silicone rubber, phr (e.g., PDMS and/or VMQ rubber) | 100 | 100 |
| Structural fillers, phr (e.g., Silica, fumed and/or precipitated) | 10-50 | 20-40 |
| Flexibility modifier, phr (e.g., hydroxyl-terminated PDMS) | 2-20 | 5-10 |
| Crosslinking agent, phr (e.g., peroxide) | 0.3-3.0 | 0.5-1.5 |
| Heat stabilizer, phr (e.g., Fe₂O₃/CeO₂) | 0.2-4 | 0.5-2 |

A fire-resistant modified silicone elastomer or rubber is provided prepared from a composition comprising uniformly dispersed low concentration of one or more fire retardant fillers, first or second fire retardant additives or intumescent additives as shown in Table 4. The conductive silicone rubber can be used as an outer tube layer for aerospace hoses.

**Table 4. Fire Resistant Silicone Rubber Compositions**

| Materials | Fire resistant composition C | Fire resistant composition D | Fire resistant composition E |
|---|---|---|---|
| Resin [e.g., Silicone Rubber (PDMS)], phr | 100 | 100 | 100 |
| Structural fillers (e.g., Silica (Fumed or Precipitated), phr | 10-50 | 20-40 | 25-35 |
| Flexibility modifier (e.g., Hydroxyl-terminated PDMS), phr | 2-20 | 3-15 | 5-10 |
| Crosslinking agent (e.g., organic Peroxide), phr | 0.3-3 | 0.4-2 | 0.5-1.5 |
| Heat stabilizer (e.g., Fe₂O₃ / CeO₂), phr | 0.2-4 | 0.3-3 | 0.5-2 |
| First fire retardant filler (e.g., ATH / MDH), phr | 3-20 | 5-15 | 6-12 |
| Second fire retardant additive [e.g., Ammonium polyphosphate (APP) / Melamine polyphosphate (MPP)], phr | 3-20 | 5-15 | 6-12 |

Any suitable mixer may be employed for preparing the silicone rubber compositions, which may be prepared by mixing two parts A and B. For example, a roll mill or a Banbury^{™} mixer (Farrel Corporation) may be used to mix the different formulations according to the disclosure, for example, under ASTM D 3182-07. For example, a silicone rubber base composition may be prepared and mixed with additives added to the silicone mix. The composition may be extruded or molded and cured. The silicone thermal insulating composition may be extruded over the inner tube or the reinforcing layers to form a green hose.

In some cases, a silicone composition can be prepared by mixing on mill with additives. In some cases, the silicone composition may be extruded over the inner tube or the reinforcing layers and may be cured at 340°F to 375°F, for example, in a molten salt bath. The composition may include a dual catalyst compound and the hi-temp catalyst doesn't cure in an oxygen environment. Silicone times are 9-15 fpm across 55 ht of salt tank.

Referring to FIG. 6, in some cases, the silicone layer 630 can comprise a cured VMQ, PMDS, or P-Si that is modified for enhanced flame retardancy, for example, similar to RCF's Rishon, either though high temperature vulcanization (also curing or cross-linking) technologies or though additives. In some cases, the rubber composition comprises a silicone rubber and a reinforcing filler.

In some cases, the silicone layer 630 is prepared from a silicone rubber composition, or a multilayer system with alternating layers of silicone rubber and HNBR, optionally further reinforced by aramid, PEEK or carbon textiles.

### Curing/Vulcanization

The green hose can be cured according to any appropriate method known in the art. For example, the green hose can be cured in an oven, furnace, vulcanization chamber, fluidized bed process, or molten salt bath. In some cases, the green hose is cured at 340°F to 375°F in a molten salt bath. Silicone rubber times can be, for example, 9-15 fpm across 55 ht of salt tank.

The cured composition may be tested for physical properties, flame resistance, and/or char formation.

Physical properties can be measured in accordance with ASTM D412 (Tensile, elongation & modulus); ASTM D2240 (hardness), for example, Shore A Hardness test was performed in accordance with ASTM D 2240-95, for example, using a calibrated Instron automatic Durometer tester.

Flame resistance can be performed according to MSHA ASTP5007 under 30 CFR §18.65; and Char formation can be employed as a visible test after MSHA ASTP5007.

### Properties

In the present disclosure, the tensile strength, tensile modulus, and tensile elongation can be measured using ASTM D638-22 standard or ISO 527-1/-2, for example, using Instron 3369 Universal Testing Machine. In some cases, the tensile strength, tensile modulus, and tensile elongation can be measured using ASTM D638-22 standard. Toughness can be measured as the area under the stress-strain curve. Impact strength can be determined by ASTM D 256-23, Izod notched and unnotched impact can be measured using Ceast 9000 Impact Tester (Instron). Tensile elongation can be measure by ASTM D638-22. Flexural strength and flexural modulus can be measured by ASTM D790-17. Tensile properties may be measured on an Instron UTM and impact strength on a TMI Impact Tester according to ASTM standards D638-22 and D256-23, respectively. Tensile strength is the amount of force that can be applied to a plastic before it yields (stretches irreparably) or breaks. Tensile elongation is the percentage increase in length after break divided by the original length. Greater elongation indicates greater ductility. Surface resistivity, volume resistivity may be measured under ASTM D257, IEC 62631-3-1, electrical conductivity can be measured according to ASTM D257 and D4496. In some cases, ASTM D257-14(2021)e1 test version is employed. The electrical conductivity of conductive composite inner tubes, hoses, hose assemblies can be tested according to SAE Aerospace Standard AS2078.

In some cases, the electrical conductivity of the electrically conductive thermoplastic polymer inner tube is tested under SAE AS2078 where for a set voltage, the electrical current along the hose must equal to or be greater than 10 µA or greater than 10 mA for sizes -03 to -08, and equal to or greater than 20 µA or greater than 20 mA for sizes -10.

In some cases, the electrically conductive thermoplastic polymer exhibits a tensile strength of > 15 MPa, >30 MPa, >40 MPa, >45 MPa, or >50 MPa.

In some cases, the electrically conductive thermoplastic polymer exhibits a tensile modulus of >275 MPa, >300 MPa, >350 MPa, >400 MPa, >450 MPa, or > 500 MPa.

In some cases, the electrically conductive thermoplastic polymer exhibits a tensile elongation of >20%, > 50%, > 80%, > 100%, >150%, >200%, >250%, >300%, or >350%.

In some cases, the electrically conductive thermoplastic polymer exhibits a flexural strength of >10 MPa, > 20 MPa, >25 MPa, or >30 MPa.

In some cases, the electrically conductive thermoplastic polymer exhibits a flexural modulus of >275 MPa, >550 MPa, >600 MPa, > 700 MPa, >800 MPa, >900 MPa, or >1,000 MPa.

In some cases, the electrically conductive thermoplastic polymer exhibits a surface resistivity at 100V of no more than 5 x 10^11 Ohms, no more than 5 x 10^10 Ohms, no more than 5 x 10^9 Ohms, no more than 5 x 10^8 Ohms, or no more than 1 x 10^8 Ohms, or in a range of 10^6- 1-^11 Ohms, when tested as per ASTM D257.

In some cases, the electrically conductive thermoplastic polymer exhibits a volume resistivity at 100V of no more than 5 x 10^11 Ohms.mm, no more than 5 x 10^10 Ohms.mm, no more than 5 x 10^9 Ohms.mm, no more than 5 x 10^8 Ohms.mm, or no more than 1 x 10^8 Ohms.mm.

### Aerospace hose construction

### Hose Configurations

In some cases, a hose is provided comprising at least two layers comprising a chemically inert, electrically conductive high-performance thermoplastic inner layer and an outer layer prepared from a composition comprising a silicone rubber. In some cases, the tube or hose comprises at least two layers including an innermost high-performance thermoplastic polymer layer and an outer silicone rubber layer. In some cases, a hose is provided comprising at least two layers comprising a chemically inert inner layer prepared from a composition comprising a high-performance polymer and a CNT filler, and an outer layer prepared from a composition comprising a silicone rubber. In some cases, a hose is provided comprising at least three layers comprising a chemically inert electrically conductive inner layer made of a high-performance thermoplastic polymer and electrically conductive fillers, an adhesive tie layer, and a protective silicone layer for strength and flame protection. In some cases, a hose is provided comprising at least three layers comprising a chemically inert electrically conductive inner layer made of a high-performance PEEK or polyimide thermoplastic polymer and CNT fillers, an adhesive tie layer, and a protective silicone layer for strength and flame protection.

Process parameters have been developed to achieve optimum compatibility between inner conductive high-performance polymer layer and the outer silicone layer. The rubber extrusion process ensures minimum material wastage during the processing. The rubber extrusion process provides control on the tube dimensions. Compared to paste extrusion for PTFE, rubber extrusion is a sustainable process where no PFAS chemicals are used.

The developed hybrid structured tubes can be used in aerospace assemblies. FIG. 2 shows a number of typical aerospace assemblies. Hose product lines are under scrutiny by the EPA due to use of PTFE material that falls under PFAS regulations. The PFAS compliant and sustainable material will be used to replace PFAS material.

An PFAS-free aerospace hose is provided having a multiplicity of layers from an inner to an outer radial direction comprising: i) an anti-static innermost tube layer prepared from a composition comprising a polyimide, an electrically conductive filler, and optionally one or more of a spacer molecule, dispersing and processing additive, an additional polymer, and additional additives; ii) optionally an adhesive tie layer; iii) an outer tube layer prepare from a composition comprising a silicone; optionally iv) one or more reinforcing layers; and optionally v) a silicone sleeve layer, optionally wherein the silicone sleeve layer comprises an inner metallic liner.

A PFAS-free hose is provided constructed with an inner layer comprising a polyimide or PEEK polymer. The PFAS-free hose is constructed with a polyimide or PEEK inner layer suitable for contact with chemicals and aromatic hydrocarbons. The PFAS-free hose is constructed with a polyimide inner layer suitable for fuel and chemical conveyance, for example, in aerospace applications. In some cases, the innermost layer is electrically conductive for static dissipation. In some cases, the innermost layer does not include a fluoropolymer.

In some cases, the innermost layer is prepared from a conducting polyimide or PEEK polymer composition comprising a polyimide polymer and an electrically conductive filler. In some cases, the polyimide composition can also include one or more spacer molecules. The spacer molecules can help impart flexibility. In some cases, the spacer molecules are pendant spacer molecules that are diamine symmetrical molecules. In some cases, the diamine symmetrical molecules have a molecular weight (MW) of from about 500 to about 1500 g/mol.

In some cases, the inner layer can comprise a multilayer structure, where the innermost layer is made of a conducting polyimide or PEEK polymer prepared from a composition comprising a polyimide polymer and an electrically conductive filler. The multilayer structure can include one or more additional layers comprising a polyimide polymer or PEEK with or without an electrically conductive filler.

In some cases, the hose comprises an electrically conductive innermost tube layer comprising at least two layers comprising: (i) an innermost layer prepared from a composition comprising a polyimide or PEEK, an electrically conductive filler, and optionally one or more of a spacer molecule, dispersing and processing additive, an additional polymer, and additional additives; and (ii) a surrounding inner layer prepared from a composition comprising a polyimide, and optionally one or more of a spacer molecule, dispersing and processing additive, an additional polymer, and additional additives, without an electrically conductive filler.

The one or more inner layers can be electrically conductive for static dissipation. The inner layer can comprise one or more electrically conductive fillers. The one or more inner layers can be modified for greater elongation. The modified inner layers can be prepared from a composition comprising a polyimide and one or more spacer molecules. The spacer molecules can include diamine spacer molecules. In some cases, the hose includes a chemically inert inner layer comprising a polyimide film.

In some cases, a hose is provided comprising at least two layers comprising a chemically inert inner layer prepared from a composition comprising a polyimide or PEEK polymer and an outer layer prepared from a composition comprising a silicone rubber. In some cases, a hose is provided comprising at least two layers comprising a chemically inert inner layer made of a polyimide film and an outer silicone layer.

In some cases, a hose is provided comprising at least three layers comprising a chemically inert inner layer prepared from a composition comprising a polyimide or PEEK polymer, an adhesive tie layer, and an outer layer prepared from a composition comprising a silicone. In some cases, a hose is provided comprising at least three layers comprising a chemically inert inner layer made of a polyimide or PEEK film, an adhesive tie layer, and a protective silicone layer for strength and flame protection.

In some cases, a hose is provided comprising one or more reinforcing layers. The one or more reinforcing layers can strengthen the inner tube, for example, improve kink resistance, increase the amount of pressure that can be applied to the inner tube, and/or can improve the robustness of the fireproof zone hose during exposure to fire. In some cases, the hose structure includes a reinforcement layer for example, including an metallic braid, aramid, ultra-high molecular weight polyethylene (UHMWPE), carbon-fiber, ceramic, glass, metal, or other polymeric, or fabric layer. In some cases, the one or more reinforcing layers can be selected from the group consisting of a metallic and a non metallic braid. The metallic reinforcing layers may include a metallic wire braid, for example, stainless steel. For example, a wire braiding process with predefined tension can be employed. In some cases, the non metallic reinforcement can be a textile braid, a polyester braid, or polypropylene braid. In some cases, the one or more reinforcing layers, for example, may include a metallic braid. The metallic braid may be, for example, a stainless steel wire braid (e.g., a corrosion resistant stainless steel, such as a 300 series stainless steel).

The hose size can be any appropriate size. In some cases, the hose size is selected from the group consisting of -2, -3, -4, -5, -6, -8, -10, -12, -14, -16, -20, -24, - 32, -36, -40, -48, -56, -64, and -72; (1/8", 3/16", ¼", 5/16", 3/8", ½", 5/8", ¾", 7/8", 1", 1-1/4", 1-1/2", 2", 2-1/4", 2-1/2", 3", 3-1/2", 4", 4-1/2")(3.2 mm, 4.8 mm, 6.4 mm, 7.9 mm, 9.5 mm, 12.7 mm, 15.9 mm, 19.0 mm, 22.2 mm, 25.4 mm, 31.8 mm, 50.8 mm, 57.6 mm, 63.5 mm, 76.2 mm, 88.9 mm, 101.6 mm, 115.2 mm).

### Methods of Making

A method of making an aerospace hose is provided, the method comprising forming an innermost tube layer prepared from a thermoplastic polymer composition comprising a thermoplastic polymer, an electrically conductive filler, and optionally a dispersing and processing additive, optionally wherein the thermoplastic polymer comprises a polyimide or PEEK; optionally applying an adhesive to the innermost tube layer; and extruding a silicone and/or HNBR rubber composition over the innermost tube layer to form a green hose; and curing the green hose to form the aerospace hose. In some cases, the method further comprises braiding a reinforcing layer over the outer silicone rubber layer. In some cases, the outer silicone rubber layer is prepared from a composition comprising a silicone rubber, a reinforcing filler, a flexibility modifier, a curing agent, a heat stabilizer, and optionally a fire retardant filler.

In some cases, the method comprises extruding or solution casing the inner layer; optionally applying the adhesive layer to the inner layer; over-extruding a first silicone rubber and/or HNBR rubber tube layer over the adhesive layer to form a green aerospace hose; and curing/vulcanizing the green aerospace hose to obtain the cured aerospace hose.

A method of making an aerospace hose is provided, the method comprising forming an innermost tube layer from a composite composition comprising a high-performance thermoplastic polymer, an electrically conductive filler, and a dispersing and processing additive; and extruding a silicone rubber composition to form an outer silicone rubber tube layer; and curing the green hose to form the aerospace hose. In some cases, the method further comprises applying an adhesive to the innermost layer or to the silicone rubber layer. In some cases, the innermost tube layer and the outer silicone rubber layer are co-extruded onto a mandrel.

In some cases, the method comprises extruding the silicone rubber tube layer onto a mandrel to form a silicone rubber tube layer; and dip coating the silicone rubber tube layer with the composite composition inside and outside of the silicone rubber tube layer to form the innermost tube layer and an outer composite layer.

In some cases, the method of making comprises extruding or solution casing the inner layer; applying the adhesive layer to the inner layer; wrapping rubber silicone sheets over the adhesive layer to form a tube layer in a green aerospace hose; and curing/vulcanizing the green aerospace hose to obtain the cured aerospace hose.

In some cases, a first silicone rubber tube layer can be prepared from a silicone composition comprising a silicone rubber; a structural filler; a flexibility modifier; a crosslinking agent; and a heat stabilizer. In some cases, the silicone rubber composition further comprises one or more or two or more fire retardant fillers.

In some cases, the method further comprises braiding a reinforcing layer over the outer silicone rubber layer. In some cases, the outer silicone rubber layer is prepared from a composition comprising a silicone rubber, a reinforcing filler, a flexibility modifier, a curing agent, a heat stabilizer, and optionally a fire retardant filler

In some cases, the innermost layer is a thin film layer. In some cases, the hose is prepared comprising co-extruding the outer silicone rubber layer on the high-performance polymer innermost tube. In some cases, the method of making the hose comprises extruding a silicone rubber tube layer; and dip coating the silicone rubber tube layer with a high-performance thermoplastic polymer composition inside and outside of the silicone rubber tube layer. In some cases, the method comprises chemically adhering the silicone rubber tube layer on a high-performance thermoplastic polymer thin tube layer. In some cases, the thin tube layer is a continuous layer of no more than 1100 microns, no more than 1000 microns, no more than 750 microns, no more than 500 microns, no more than 300 microns, no more than 250 microns, or no more than 200 microns in thickness, or is in a range of from 100 microns to 1100 microns, 100 microns to 1000 microns, 100 microns to 750 microns, 100 microns to 500 microns, or 100 microns to 250 microns.

In some cases, an electrically conductive composite is prepared according to the method 100 of FIG. 1. The method comprises adding a high-performance thermoplastic polymer 105, a dispersing and processing additive 110, and a CNT electrically conductive powder 115, to a hopper 125 to form a mixture 120. The mixture 120 is moved from the hopper through a barrel 150 comprising a screw 130, heaters 140 through a nozzle 160 and past a thermocouple 170 to create the high-performance polymer composite 190, for example in a pellet form.

Hose assemblies comprising hoses prepared according to the disclosure are shown in FIG. 2. Hoses 230 and 250, for example, can include an exterior reinforcement layer such as an outermost braided stainless steel reinforcement layer. Alternatively, the hose can have an exterior outer silicone rubber layer, or silicone fire cover and chafe resistant fiber sleeve as shown in hoses 210, 220, or 240. An exemplary hose 300 according to the disclosure can have exactly two layers as shown in FIG. 3 including an innermost high-performance polymer composite layer 310 and an outer silicone rubber tube layer 320. Another exemplary hose 400 according to the disclosure can have three layers as shown in FIG. 4 including an innermost high-performance polymer composite layer 410, an outer silicone rubber tube layer 420, and an outermost metallic braided reinforcement layer 430. Optionally an adhesive layer can be disposed between the high-performance polymer composite layer 410 and the outer silicone rubber tube layer 420.

The hose according to the disclosure can be rated for a continuous operating temperature range of -65 °F to +450 °F (-53 °C to 232 C).

The above specification, examples and data provide a complete description of the manufacture and use of the composition of the invention. Since many embodiments of the invention can be made without departing from the spirit and scope of the invention, the invention resides in the claims hereinafter appended.

### Clauses

Clause 1. A hose, comprising at least two layers:
an innermost layer comprising a thermoplastic polymer film prepared from a composition comprising a thermoplastic polymer, an electrically conductive filler, and a dispersing and processing additive; and
a first rubber tube layer surrounding the innermost layer; optionally further comprising a tie layer disposed between the innermost layer and the rubber layer, wherein the tie layer comprises an adhesive.

Clause 2. The hose of clause 1, wherein the thermoplastic polymer is selected from the group consisting of polyimide (PI), polyamide (PA), polyphthalamide (PPA), polyetherimide (PEI), polyamide-imide (PAI), polyaryletherketone (PAEK), polyetherketone (PEK), polyetherketoneketone (PEKK), and bio-based polyetheretherketone (PEEK), optionally wherein the thermoplastic polymer is a high-performance thermoplastic polymer.

Clause 3. The hose of clause 1 or 2, wherein the thermoplastic polymer is a PEEK polymer or a polyimide polymer, optionally wherein the polyimide polymer is an aromatic polyimide polymer.

Clause 4. The hose of clause 1, comprising at least three layers :
the innermost thermoplastic polymer layer comprising a polyimide or PEEK polymer film;
the first silicone rubber tube layer surrounding the innermost layer; and
a tie layer disposed between the innermost layer and the rubber layer, wherein the tie layer comprises an adhesive.

Clause 5. The hose of any one of clauses 2-4, wherein the polyimide polymer is produced by condensation of a dianhydride and a diamine, optionally wherein the dianhydride is selected from the group consisting of pyromellitic dianhydride (PMDA), 1,4,5,8-naphthalene tetracarboxylic acid dianhydride (NTCDA), 3,3',4,4'-biphenyltetracarboxylic dianhydride (BPDA), and benzophenone-3,3',4,4'-tetracarboxylic dianhydride (BTDA), and optionally wherein the diamine is selected from the group consisting of 4,4'-oxydianiline (ODA), 4,4'-diaminodiphenyl ether (DAPE), 3,4'-oxydianiline, p-phenylenediamine (PDA), meta-phenylene diamine (MDA), 3,3'-diaminodiphenylmethane (DDM), and 5(6) -Amino-1-(4-aminophenyl)-1,3,3, trimethylindane (DAPI).

Clause 6. The hose of any one of clauses 2-5, wherein the polyimide polymer is selected from the group consisting of poly (pyromellitic dianhydride-oxydianiline [PMDA-ODA], poly (3,3',4,4'-biphenyltetracarboxylic dianhydride-phenylene diamine [BPDA-PDA], and 5(6) -Amino-1-(4-aminophenyl)-1,3,3, trimethylindane-benzophenonetetacarboxylic dianhydride copolymer [BTDA-DAPI].

Clause 7. The hose of any one of clauses 2-5, wherein the innermost thermoplastic polymer layer comprises the polyimide polymer and/or the PEEK polymer and optionally one or more additional thermoplastic polymers in a combined amount from 90-99.8 wt%, 93-99.6 wt%, or 95-99.5 wt%.

Clause 8. The hose of any one of clauses 1-7, wherein the innermost thermoplastic polymer layer has a thickness of no more than 1100 microns, no more than 1000 microns, no more than 750 microns, no more than 500 microns, no more than 300 microns, or no more than 250 microns, optionally wherein the innermost film layer has a thickness in a range of from 100 microns to 1100 microns, 100 microns to 1000 microns, 100 microns to 750 microns, 100 microns to 500 microns, 100 microns to 300 microns, or 100 microns to 250 microns.

Clause 9. The hose of any one of clauses 1-8, wherein the innermost thermoplastic polymer layer is electrically conductive for static dissipation.

Clause 10. The hose of any one of clauses 1-9, wherein the innermost thermoplastic polymer film layer is prepared from a composition comprising a polyimide or PEEK polymer, an electrically conductive filler, optionally a spacer molecule, optionally a dispersing and processing additive, and optionally an additional thermoplastic polymer.

Clause 11. The hose of any one of clauses 1-10, wherein the innermost thermoplastic polymer layer does not include a fluoropolymer.

Clause 12. The hose of any one of clauses 1-11, further comprising an outer silicone sleeve layer, optionally wherein the silicone sleeve layer comprises an inner metallic liner.

Clause 13. The hose of any one of clauses 1-12, further comprising one or more reinforcing layers.

Clause 14. The hose of clause 13, wherein the reinforcing layers comprise a metallic braid, non-metallic braid comprising an aramid, ultra-high molecular weight polyethylene (UHMWPE), carbon-fiber, ceramic, glass, metal, or a fabric layer.

Clause 15. The hose of any one of clauses 1-14, wherein the electrically conductive filler is selected from the group consisting of carbon nanotubes (CNTs), reduced graphene oxide (rGO), MXene composition, carbon black, carbon fiber, graphite, graphene, stainless-steel fibers, and silver nanowires.

Clause 16. The hose of any one of clauses 1-15, wherein the thermoplastic polymer film is prepared from a composition comprising 0.01-5.0 wt%, 0.1-4.0 wt%, 0.2-3.0 wt%. or 0.25-2.0 wt% of the electrically conductive filler.

Clause 17. The hose of clause 10, wherein the additional thermoplastic polymer is selected from the group consisting of polyamide (PA), polyphthalamide (PPA), polyetherimide (PEI), polyamide-imide (PAI), polyaryletherketone (PAEK), polyetherketone (PEK), polyetherketoneketone (PEKK), and polyetheretherketone (PEEK).

Clause 18. The hose of clause 10, wherein the spacer molecule is a diamine symmetrical molecule, optionally wherein the diamine is an aliphatic diamine or an aromatic diamine, further optionally wherein the diamine symmetrical molecules have a molecular weight (MW) of from about 500 to about 1500 g/mol.

Clause 19. The hose of claim 10 or 18, wherein the composition comprises 0-5.0 wt%, 0.1-4.0 wt%, or 0.5-3.0 wt% of the spacer molecule.

Clause 20. The hose of clause 10, wherein the additional additive is selected from the group consisting of a UV stabilizer, light stabilizer, antioxidants, plasticizer, heat stabilizer, pigment, flame retardant, mechanical filler, lubricant, chain extender, chain cutter, high temperature wax, and impact modifier.

Clause 21. The hose of clause 20, wherein the composition comprises the one or more additional additives in a range of 0-5 wt%, 0.05-4 wt%, 0.1-3 wt%, or 0.5-2 wt% one or more combined additional additives.

Clause 22. The hose of any one of clauses 1-21, wherein the dispersing and processing additive is selected from the group consisting of selected from the group consisting of polyhedral oligomeric silsesquioxanes (POSS), silanes, and silanol-POSS, optionally wherein the dispersing and processing additive is selected from the group consisting of trisilanol isobutyl POSS, trisilanol isooctyl POSS, octaisobutyl POSS, trisilanol phenyl POSS, trichlorosilane (SiHCl₃), tetramethylsilane (Si(CH₃)₄), and tetraethoxysilane (Si(OCH₂CH₅)₄).

Clause 23. The hose of clause 22, wherein the composition comprises from 0-5.0 wt%, 0.1 to 5.0 wt%, 0.2 to 3.0 wt%; or 0.25-2.0 wt% of the dispersing and processing additive.

Clause 24. The hose of any one of clauses 1-23, wherein the first silicone rubber tube layer is prepared from a composition comprising a silicone selected from the group consisting of a methyl silicone (MQ), vinyl methyl silicone (VMQ), phenyl methyl silicone (PVMQ), and a polydimethylsiloxane (PDMS).

Clause 25. A PFAS-free aerospace hose having a multiplicity of layers from an inner to an outer radial direction comprising:
i) an anti-static innermost tube layer prepared from a composition comprising a polyimide or PEEK polymer, an electrically conductive filler, and optionally one or more of a spacer molecule, optionally a dispersing and processing additive, optionally an additional polymer, and optional additional additives;
ii) optionally an adhesive tie layer; and
iii) a first silicone tube layer prepared from a composition comprising a silicone.

Clause 26. The hose of clause 25, further comprising one or more reinforcing layers.

Clause 27. The hose of clause 25 or 26, further comprising an outermost silicone sleeve layer, optionally wherein the silicone sleeve layer comprises an inner metallic liner.

Clause 28. The hose of any one of clauses 25-27, wherein the innermost tube layer is prepared from a composition comprising
90-99.8 wt% of a polyimide polymer or a PEEK polymer optionally combined with one or more additional thermoplastic polymers;
0.01-5.0 wt of an electrically conductive filler;
0-5 wt% of a spacer molecule;
0-5 wt% of a dispersing and processing additive; and
0-5 wt% of one or more combined additional additives.

Clause 29. The hose of any one of clauses 25-28, wherein the first silicone rubber tube layer is prepared from a composition comprising
40-99.5 wt% of a silicone base rubber;
0.1-3.0 wt% curing agent;
0.1-2.0 wt% organic peroxide;
0-20 wt% of a structural filler;
0-20 wt% of a flame retardant; and
0-5.0 wt% of a pigment.

Clause 30. A method of making an aerospace hose comprising
forming an innermost tube layer prepared from a thermoplastic polymer composition comprising a thermoplastic polymer and an electrically conductive filler, optionally wherein the thermoplastic polymer comprises a polyimide or a PEEK polymer;
optionally applying an adhesive to the innermost tube layer; and
extruding a silicone rubber composition over the innermost tube layer; and
curing the green hose to form the aerospace hose.

Clause 31. The method of clause 30, further comprising performing surface functionalization of a surface of the innermost layer after forming.

Clause 32. The method of clause 31, wherein the surface functionalization is selected from the group consisting of corona treatment, ozone treatment, plasma treatment, and e-beam irradiation to increase surface energy and promote adhesion between the outer rubber layer and the inner thermoplastic layer.

Clause 33. The method of any one of clauses 30-33, wherein the method comprises
extruding or solution casing the inner layer;
applying the adhesive layer to the inner layer;
over-extruding a first silicone rubber tube layer over the adhesive layer to form a green aerospace hose; and
curing/vulcanizing the green aerospace hose to obtain the cured aerospace hose.

Clause 34. The method of clause 30, wherein the method comprises
extruding or solution casing the inner layer;
applying the adhesive layer to the inner layer;
wrapping rubber silicone sheets over the adhesive layer to form a tube layer in a green aerospace hose; and
curing/vulcanizing the green aerospace hose to obtain the cured aerospace hose.

Clause 35. The method of clause 30, wherein the innermost tube layer and the outer silicone rubber layer are co-extruded onto a mandrel.

Clause 36. The method of claim 30, comprising extruding the silicone rubber tube layer onto a mandrel to form a silicone rubber tube layer; and dip coating the silicone rubber tube layer with the composite composition inside and outside of the silicone rubber tube layer to form the innermost tube layer and an outer composite layer.

Clause 37. The method of making an aerospace hose of any one of claims 30-36, wherein the innermost tube layer has a thickness of no more than 1100 microns, no more than 1000 microns, no more than 750 microns, no more than 500 microns, no more than 300 microns, no more than 250 microns, or in a range of 100 to 1100 microns, 100 to 1000 microns, 100 to 750 microns, 100 to 500 microns, 100 to 300 microns, or 100 to 250 microns.

## Claims

1. A hose, comprising at least two layers:
an innermost layer comprising a thermoplastic polymer film prepared from a composition comprising a thermoplastic polymer, an electrically conductive filler, and optionally a dispersing and processing additive; and
a first rubber tube layer surrounding the innermost layer.

2. The hose of claim 1, further comprising
a tie layer disposed between the innermost layer and the first silicone rubber layer,
wherein the tie layer comprises an adhesive.

3. The hose of claim 1 or 2, wherein the thermoplastic polymer is selected from the group consisting of a polyimide (PI), polyamide (PA), polyphthalamide (PPA), polyetherimide (PEI), polyamide-imide (PAI), polyaryletherketone (PAEK), polyetherketone (PEK), polyetherketoneketone (PEKK), polyetheretherketone (PEEK), polyetherether ketoneketone (PEEKK), polyetherketoneketone (PEKK), polyetherketone etherketoneketone (PEKEKK), and polyphenylene sulfide (PPS), and wherein the thermoplastic polymer is a non-halogenated thermoplastic polymer, optionally wherein the thermoplastic polymer is a PEEK polymer or a polyimide polymer, further optionally wherein the polyimide polymer is an aromatic polyimide polymer.

4. The hose of any one of claims 1-3, wherein the electrically conductive filler is selected from the group consisting of carbon nanotubes, graphene, carbon black, reduced graphene oxide (rGO), MXene composition, carbon fiber, graphite, stainless-steel fibers, and silver nanowires, optionally wherein the electrically conductive filler comprises carbon nanotubes having a high aspect ratio of >500, > 1,000, >1,500, >5,000, or > 10,000, further optionally wherein the CNTs are selected from the group consisting of single-walled carbon nanotubes (SWCNTs) and multi-walled carbon nanotubes (MWCNTs).

5. The hose of any one of claims 1-4, wherein the dispersing and processing additive is selected from the group consisting of polyhedral oligomeric silsesquioxanes (POSS), silanes, and silanol-POSS, optionally wherein the dispersing and processing additive is selected from the group consisting of a trisilanol isobutyl POSS, trisilanol isooctyl POSS, octaisobutyl POSS, trisilanol phenyl POSS, trichlorosilane (SiHCl₃), tetramethylsilane (Si(CH₃)₄), and tetraethoxysilane (Si(OCH₂CH₅)₄).

6. The hose of any one of claims 1-5, wherein the innermost thermoplastic polymer film layer has a thickness of no more than 1100 microns, no more than 1000 microns, no more than 750 microns, no more than 500 microns, no more than 300 microns, or no more than 250 microns, optionally wherein the innermost film layer has a thickness in a range of from 100 microns to 1100 microns, 100 microns to 1000 microns, 100 microns to 750 microns, 100 microns to 500 microns, 100 microns to 300 microns, or 100 microns to 250 microns.

7. The hose of any one of claims 1-6, wherein the innermost layer is electrically conductive for static dissipation.

8. The hose of any one of claims 1-7, wherein the thermoplastic film is prepared from a composition comprising a polyimide or PEEK polymer, the electrically conductive filler, optionally the dispersing and processing additive, optionally a spacer molecule, optionally an additional additive, and optionally an additional thermoplastic polymer.

9. The hose of claim 8, wherein the spacer molecule is a diamine symmetrical molecule, optionally wherein the diamine is an aliphatic diamine or an aromatic diamine.

10. The hose of claim 8 or 9, wherein the additional additive is selected from the group consisting of a UV stabilizer, light stabilizer, antioxidants, plasticizer, heat stabilizer, pigment, flame retardant, mechanical filler, lubricant, chain extender, chain cutter, high temperature wax, and impact modifier.

11. The hose of any one of claims 1-10, wherein the innermost layer does not include a fluoropolymer.

12. The hose of any one of claims 1-11, wherein the innermost layer is prepared from a composition comprising 90-99.8 wt% of the thermoplastic polymer, 0.1-5.0 wt% of the electrically conductive filler, and 0.1-5.0 wt% of the dispersing and processing additive, optionally wherein the thermoplastic polymer is a high-performance thermoplastic polymer.

13. The hose of any one of claims 1-12, wherein the first silicone rubber tube layer is prepared from a silicone rubber composition comprising a silicone rubber; a structural filler; a flexibility modifier; a crosslinking agent; and a heat stabilizer, optionally wherein the silicone rubber composition further comprises one or more or two or more fire retardant fillers,
wherein the silicone rubber is selected from the group consisting of a methyl silicone (MQ), vinyl methyl silicone (VMQ), phenyl methyl silicone (PVMQ), and a polydimethylsiloxane (PDMS),
optionally wherein the structural filler is selected from the group consisting of precipitated SiO₂, fumed silica SiO₂, ground silica SiO₂, chopped glass, and chopped PEEK fibers,
optionally wherein the flexibility modifier is selected from the group consisting of a hydroxyl-terminated PDMS, hydroxyl-terminated vinyl silicone, hydroxyl-terminated methyl-phenyl silicone, hydroxyl-terminated phenyl silicone, and hydroxyl-terminated polymethyl(3,3,3-trifluoropropyl)siloxane fluid, and
optionally wherein the heat stabilizer is selected from the group consisting of ferric oxide, Fe₂O₃, ceric oxide, CeO₂, and a combination thereof.

14. The hose of any one of claims 1-13, further comprising an outer silicone sleeve layer, optionally wherein the silicone sleeve layer comprises an inner metallic liner; and/or one or more reinforcing layers, optionally wherein the one or more reinforcing layers comprise a metallic braid or a non-metallic braid, said non-metallic braid comprising an aramid, carbon-fiber, ceramic, glass, or a fabric layer.

15. A method of making an aerospace hose comprising
forming an innermost tube layer prepared from a composition comprising a thermoplastic polymer; an electrically conductive filler; and optionally a dispersing and processing additive, optionally wherein the thermoplastic polymer comprises a polyimide or a PEEK polymer;
optionally applying an adhesive to the innermost tube layer; and
extruding a silicone rubber composition over the innermost tube layer to form a green hose; and
curing the green hose to form the aerospace hose.
